# FASCICULE DE BREVET EUROPEEN

(11) **EP 4 078 236 B1**
(45) Date de publication et mention de la délivrance du brevet: **19.03.2025**
(21) Numéro de dépôt: 20845592.3
(22) Date de dépôt: 16.12.2020
(51) Int. Cl.: G01S 17/42, G02B 27/01

(54) **PÉRIPHÉRIQUE D'INTERACTION, PROCÉDÉ DE RELÈVE, CASQUE DE RÉALITÉ VIRTUELLE, PROCÉDÉ DE REPRODUCTION D'UN POINT RÉEL DANS UN ESPACE VIRTUEL, DISPOSITIF ET PROCÉDÉ DE VIRTUALISATION D'UN ESPACE RÉEL**
INTERAKTIONSPERIPHERIEGERÄT, DETEKTIONSVERFAHREN, HEADSET FÜR VIRTUELLE REALITÄT, VERFAHREN ZUM REPRODUZIEREN EINES REALEN PUNKTES IM VIRTUELLEN RAUM, VORRICHTUNG UND VERFAHREN ZUM VIRTUALISIEREN EINES REALEN RAUMES
INTERACTION PERIPHERAL, DETECTION METHOD, VIRTUAL REALITY HEADSET, METHOD FOR REPRODUCING A REAL POINT IN VIRTUAL SPACE, DEVICE AND METHOD FOR VIRTUALISING A REAL SPACE

(30) Priorité: 17.12.2019 FR 1914655
(43) Date de publication de la demande: 26.10.2022
(73) Titulaire: Orange, 92130 Issy-les-Moulineaux (FR)
(72) Inventeur: FLOUTIER, Christophe, 92326 CHÂTILLON CEDEX (FR); JOUIN, Maxime, 92326 CHÂTILLON CEDEX (FR); LEDUNOIS, Valérie, 92326 CHÂTILLON CEDEX (FR)
(86) Numéro de dépôt international: PCT/FR2020/052466
(87) Numéro de publication internationale: WO 2021/123619

(56) Documents cités:
- US-A1- 2016 290 764
- US-A1- 2017 067 987
- US-A1- 2017 184 721
- US-A1- 2017 337 743
- GREGG-SMITH AUSTIN ET AL: "Investigating spatial guidance for a cooperative handheld robot", 2016 IEEE INTERNATIONAL CONFERENCE ON ROBOTICS AND AUTOMATION (ICRA), IEEE, 16 May 2016 (2016-05-16), pages 3367 - 3374, XP032908535, DOI: 10.1109/ICRA.2016.7487512

## Description

### Domaine technique

L'invention concerne un périphérique d'interaction, un procédé de relevé de point réel, un casque de réalité virtuel, un procédé de reproduction d'un point réel dans un espace virtuel, un dispositif et un procédé de virtualisation d'un espace réel. La virtualisation d'un espace réel permet notamment d'obtenir un plan en deux, trois ou n dimensions d'un espace réel reproductible éventuellement en réalité virtuel.

### État de la technique

Afin de générer une représentation en trois dimensions d'un espace réel, les professionnels utilisent en général un scanner 3D qui permet de scanner la pièce ou l'espace à modéliser. Toutefois, l'utilisation d'un tel appareil nécessite une calibration de l'appareil, et un bon positionnement dans l'espace à cartographier pour la prise de mesures. De plus, la modélisation obtenue à partir de données mesurées par un scanner 3D n'est toujours pas optimale, notamment dans le cas où l'espace à modéliser comporte des obstacles, par exemple dans le cas d'une pièce meublée. La modélisation nécessite alors des retouches manuelles qui peuvent être fastidieuses et nécessitent un certain niveau d'expertise avec les outils de CAO (pour Conception Assistée par Ordinateur). De plus, le coût d'un scanner 3D est assez élevé.

Le document US2017/0337743A1 divulgue l'utilisation d'un casque de réalité virtuelle associé à un contrôleur pour commander un instrument topographique ou scanner 3D. Le système mesure pas de position relative d'un point mais délivre un scan fournissant une image complète ce qui engendre des coûts de calculs de l'image important par le scanner puisqu'une image comporte un nombre de points très importants.

Une autre méthode pour générer une représentation tridimensionnelle d'un espace réel est l'utilisation d'un plan en deux dimensions existant, généré manuellement ou bien obtenu à partir d'un fichier. Toutefois, une telle méthode nécessite des compétences spécialisées dans l'utilisation des logiciels de modélisation. De plus, les plans 2D d'architecte, lorsqu'ils sont disponibles, sont parfois en léger décalage par rapport à la réalisation effective.

### Exposé de l'invention

Un des buts de la présente invention est de remédier à des inconvénients de l'état de la technique. Un objet de l'invention est un périphérique d'interaction apte à être connecté à un casque de réalité virtuelle, le casque de réalité virtuelle étant apte à fonctionner en mode réalité augmenté et en mode réalité virtuelle, le périphérique d'interaction comportant un télémètre apte à fournir, en réponse à une commande d'un utilisateur du casque de réalité virtuelle en mode réalité augmentée au moyen du périphérique d'interaction visant un point réel d'un espace réel, au casque de réalité virtuelle, un signal de mesure comportant une mesure de position relative du point réel de l'espace réel, le point réel étant visé par le télémètre lors d'un relevé de l'espace réel, le signal de mesure étant apte à permettre une reproduction du point réel mesuré dans un espace virtuel rendu par le casque de réalité virtuelle en mode réalité virtuelle lors d'une utilisation de l'espace virtuel.

Ainsi, le point réel peut être reproduit dans l'espace virtuel en mode réalité virtuelle lors d'une utilisation de l'espace virtuel en réduisant les risques d'erreurs car les outils de mesure sont de simple périphérique d'interaction dont la manipulation en mode réalité augmentée par un utilisateur est simple. En outre, la mesure au moyen d'un télémètre équipant le périphérique d'interaction permet une mesure plus précise car le point réel mesuré est relevé au moyen par exemple d'un pointage laser permettant d'identifier plus précisément le point réel à relever. De plus, la mesure au moyen d'un télémètre équipant le périphérique d'interaction permet le relevé d'un point réel d'un espace encombré tel qu'une pièce meublée, un espace de dépôt rempli, un espace extérieur meublé et/ou planté, etc. sans nécessité le déplacement d'objets encombrants, ni des acrobaties de la part de l'utilisateur pour aller relever un point réel placé derrières un ou des meubles, et/ou un ou des cartons, caisses, et/ou une ou des plantes, etc.

Avantageusement, le périphérique d'interaction comporte un détecteur de direction apte à fournir, au casque de réalité virtuelle, un signal comportant une direction dans laquelle le télémètre a mesuré le point réel.

Avantageusement, le périphérique d'interaction comporte un détecteur de localisation apte à fournir, au casque de réalité virtuelle, un signal comportant une position du périphérique d'interaction.

Avantageusement, le périphérique d'interaction comporte un contrôleur apte à être manipuler par un utilisateur portant le casque de réalité virtuelle, le contrôleur activant le télémètre sur commande de l'utilisateur.

Avantageusement, le périphérique d'interaction est un périphérique portable.

Un objet de l'invention est aussi un procédé de relevé d'un espace réel destiné à être intégré dans un espace virtuel, le procédé de relevé mis en œuvre par un périphérique d'interaction connecté à un casque de réalité virtuelle, le casque de réalité virtuelle étant apte à fonctionner en mode réalité augmenté et en mode réalité virtuelle, le procédé de relevé d'un espace réel comportant :
- un pointage d'un point réel de l'espace réel par le périphérique d'interaction,
- une mesure de la position relative d'un point réel visé par le périphérique d'interaction lors du pointage en réponse à une commande d'un utilisateur d'un casque de réalité virtuelle en mode réalité augmentée connecté au périphérique d'interaction, la mesure de position relative fournissant un signal de mesure apte à permettre à reproduire le point réel visé dans un espace virtuel rendu par le casque de réalité virtuelle.

Un objet de l'invention est également un casque de réalité virtuelle apte à être connecté à un périphérique d'interaction, le casque de réalité virtuelle étant apte à fonctionner en mode réalité augmenté et en mode réalité virtuelle, le casque de réalité virtuelle comporte un afficheur apte à reproduire un point virtuel dans un espace virtuel en mode réalité virtuelle lors d'une utilisation de l'espace virtuel, le point virtuel étant défini par une position relative du point virtuel dans l'espace virtuel fonction d'un signal de mesure d'un point réel visé par le périphérique d'interaction dans l'espace réel en réponse à une commande d'un utilisateur du casque de réalité virtuelle en mode réalité augmentée au moyen du périphérique d'interaction visant le point réel de l'espace réel.

Avantageusement, l'afficheur est apte à permettre la visibilité de l'espace réel par l'utilisateur porteur du casque de réalité virtuelle lors d'un relevé d'un espace réel au moyen du périphérique d'interaction.

Un objet de l'invention est encore un procédé de reproduction d'un point réel dans un espace virtuel rendu par un casque de réalité virtuelle apte à être connecté à un périphérique d'interaction, le casque de réalité virtuelle étant apte à fonctionner en mode réalité augmenté et en mode réalité virtuelle, le procédé de reproduction comporte un affichage d'un point virtuel dans un espace virtuel en mode réalité virtuelle lors d'une utilisation de l'espace virtuel, le point virtuel étant défini par une position relative du point virtuel dans l'espace virtuel fonction d'un signal de mesure d'un point réel visé par le périphérique d'interaction dans l'espace réel en réponse à une commande d'un utilisateur du casque de réalité virtuelle en mode réalité augmentée au moyen du périphérique d'interaction visant le point réel de l'espace réel, et d'une position et d'une orientation du périphérique d'interaction lorsqu'il vise le point réel.

Un objet de l'invention est un dispositif de virtualisation d'un point réel dans un espace virtuel rendu par un casque de réalité virtuelle apte à être connecté à un périphérique d'interaction, le casque de réalité virtuelle étant apte à fonctionner en mode réalité augmenté et en mode réalité virtuelle, le dispositif de virtualisation comporte un calculateur d'une position relative d'un point virtuel dans l'espace virtuel en fonction d'un signal de mesure du point réel visé par le périphérique d'interaction dans un espace réel en réponse à une commande d'un utilisateur du casque de réalité virtuelle en mode réalité augmentée au moyen du périphérique d'interaction visant le point réel de l'espace réel, et d'une position et d'une orientation du périphérique d'interaction lorsqu'il vise le point réel, le calculateur recevant le signal de mesure du périphérique d'interaction et commande l'affichage du point virtuel dans l'espace virtuel en fournissant la position relative du point virtuel au casque de réalité virtuelle rendant l'espace virtuel.

Un objet de l'invention est encore un procédé de virtualisation d'un point réel dans un espace virtuel rendu par un casque de réalité virtuelle apte à être connecté à un périphérique d'interaction, le casque de réalité virtuelle étant apte à fonctionner en mode réalité augmenté et en mode réalité virtuelle, le procédé de virtualisation comporte un calcul d'une position relative d'un point virtuel dans l'espace virtuel en fonction d'un signal de mesure du point réel visé par le périphérique d'interaction dans un espace réel en réponse à une commande d'un utilisateur du casque de réalité virtuelle en mode réalité augmentée au moyen du périphérique d'interaction visant le point réel de l'espace réel, et d'une position et d'une orientation du périphérique d'interaction lorsqu'il vise le point réel, le calcul déclenche l'affichage du point virtuel dans l'espace virtuel en fournissant la position relative du point virtuel au casque de réalité virtuelle rendant l'espace virtuel.

Un objet de l'invention est également un dispositif de virtualisation d'une zone réelle d'un espace réel dans un espace virtuel rendu par un casque de réalité virtuelle apte à être connecté à un périphérique d'interaction, la zone réelle étant composé d'au moins un objet réel, le dispositif de virtualisation d'une zone réelle comporte :
- un dispositif de virtualisation de point réel selon l'invention,
- un générateur d'objet virtuel en fonction des positions relatives de plusieurs points virtuels fournies par le dispositif de virtualisation de point réel, le générateur d'objet virtuel déclenche l'affichage de l'objet virtuel dans l'espace virtuel en fournissant au moins une dimension de l'objet virtuel et une position relative de l'objet virtuel au casque de réalité virtuel rendant l'espace virtuel.

Un objet de l'invention est aussi un procédé de virtualisation d'une zone réelle d'un espace réel dans un espace virtuel rendu par un casque de réalité virtuelle apte à être connecté à un périphérique d'interaction, la zone réelle étant composé d'au moins un objet réel, le procédé de virtualisation d'une zone réelle comporte :
- un procédé de virtualisation de point réel selon l'invention,
- une génération d'objet virtuel en fonction des positions relatives de plusieurs points virtuels fournies par le dispositif de virtualisation de point réel, la génération d'objet virtuel déclenche l'affichage de l'objet virtuel dans l'espace virtuel en fournissant au moins une dimension de l'objet virtuel et une position relative de l'objet virtuel au casque de réalité virtuel rendant l'espace virtuel.

Avantageusement, le procédé de virtualisation comporte une répétition des étapes de virtualisation de point réel et génération d'objet virtuel pour plusieurs objets de la zone réelle apte à permettre une génération d'un plan virtuel de la zone réelle, le plan virtuel étant composé par les objets virtuels générés.

Avantageusement, selon une implémentation de l'invention, les différentes étapes d'un procédé selon l'invention sont mises en œuvre par un logiciel ou programme d'ordinateur, ce logiciel comprenant des instructions logicielles destinées à être exécutées par un processeur de données d'un dispositif faisant partie d'un périphérique d'interaction et/ou d'un casque de réalité virtuelle et/ou d'un équipement d'un réseau de communication et étant conçus pour commander l'exécution des différentes étapes d'au moins l'un de ces procédés.

L'invention vise donc aussi un programme comprenant des instructions de code de programme pour l'exécution des étapes du procédé de relevé d'un espace réel selon l'invention et/ou un procédé de reproduction selon l'invention et/ou un procédé de virtualisation d'un point réel selon l'invention ou d'une zone réelle selon l'invention lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

### Brève description des dessins

Les caractéristiques et avantages de l'invention apparaîtront plus clairement à la lecture de la description, faite à titre d'exemple, et des figures s'y rapportant qui représentent :
[Fig 1a] Figure 1a, un schéma-bloc simplifié d'un périphérique d'interaction selon l'invention,
[Fig 1b] Figure 1b, un schéma tridimensionnel simplifié d'un périphérique d'interaction selon l'invention,
[Fig 2a] Figure 2a, un schéma-bloc simplifié d'un casque de réalité virtuel selon l'invention,
[Fig 2b] Figure 2b, un schéma tridimensionnel simplifié d'un casque de réalité virtuel selon l'invention,
[Fig 3] Figure 3, un schéma-bloc simplifié d'un dispositif de virtualisation d'un espace réel selon l'invention,
[Fig 4] Figure 4, un schéma-bloc simplifié d'un procédé de relevé d'un point réel selon l'invention,
[Fig 5] Figure 5, un schéma-bloc simplifié d'un procédé de reproduction virtuel d'un point réel dans un espace virtuel selon l'invention,
[Fig 6] Figure 6, un schéma-bloc simplifié d'un procédé de virtualisation d'au moins un élément d'un espace réel selon l'invention,
[Fig 7] Figure 7, un schéma simplifié d'une pièce réelle à virtualiser selon l'invention,
[Fig 8a] Figure 8a, un schéma simplifié d'un relevé d'un mur réel à virtualiser selon l'invention,
[Fig 8b] Figure 8b, un schéma simplifié d'une reproduction d'un mur virtuel généré à partir des relevés du mur réel de la figure 8a selon l'invention,
[Fig 9a] Figure 9a, un schéma simplifié d'un relevé d'une fenêtre réelle à virtualiser sur le mur de la figure 8a selon l'invention,
[Fig 9b] Figure 9b, un schéma simplifié d'une reproduction d'un mur virtuel généré à partir des relevés du mur réel de la figure 8a et d'une fenêtre virtuelle générée à partir des relevées de la fenêtre réel de la figure 9a sur le mur virtuel selon l'invention,
[Fig 10a] Figure 10a, un schéma simplifié d'un relevé d'une porte réelle à virtualiser sur un mur réel virtualisé selon l'invention,
[Fig 10b] Figure 10b, un schéma simplifié d'une reproduction d'un mur virtuel et d'une porte virtuelle générée à partir des relevées de la porte réel de la figure 10a sur le mur virtuel selon l'invention,
[Fig 11a] Figure 11a, un schéma simplifié d'un relevé d'un plafond à virtualiser selon l'invention,
[Fig 11b] Figure 11b, un schéma simplifié d'une reproduction du plafond généré à partir des relevés du plafond réel de la figure 11a selon l'invention,
[Fig 12] Figure 12, un schéma simplifié d'une reproduction d'une pièce virtuelle généré à partir des relevés de la pièce réelle de la figure 7 selon l'invention,

### Description des modes de réalisation

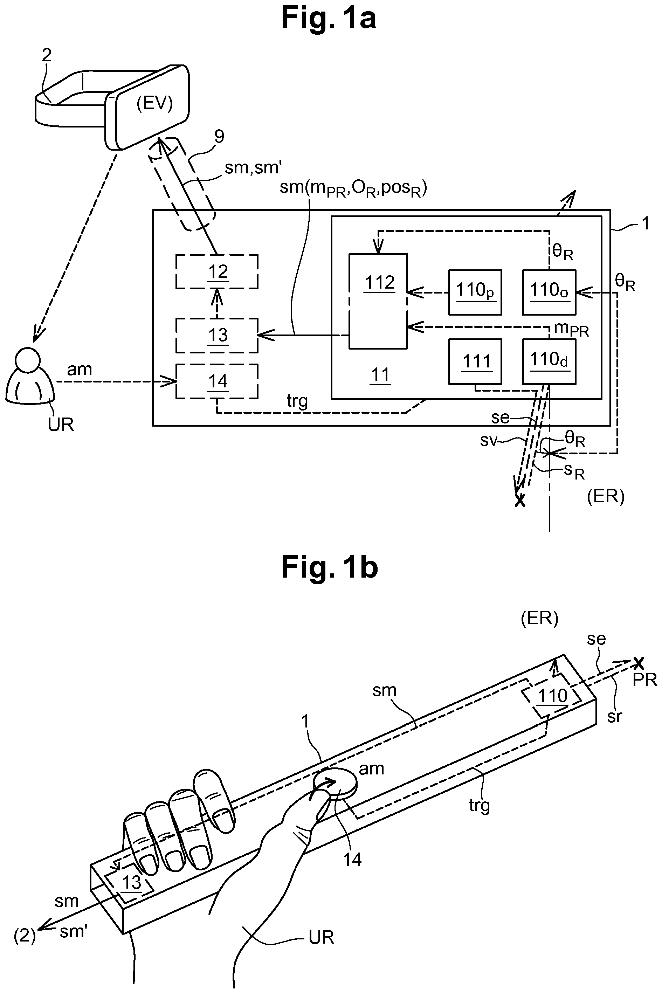

La figure 1a illustre un schéma-bloc simplifié d'un périphérique d'interaction selon l'invention.

Le périphérique d'interaction 1 est apte à être connecté à un casque de réalité virtuelle 2. Le périphérique d'interaction 1 comporte un télémètre 11 apte à fournir, au casque de réalité virtuelle 2, un signal de mesure *sm* comportant une mesure m_{PR} de position relative d'un point réel PR d'un espace réel ER, le point réel PR étant visé par le télémètre11. Le signal de mesure sm est apte à permettre une reproduction PV du point réel mesuré dans un espace virtuel EV rendu par le casque de réalité virtuelle 2.

En particulier, le périphérique d'interaction 1 comporte un détecteur de direction 110_{θ} apte à fournir, au casque de réalité virtuelle 2, un signal *sm* comportant une direction θ_{R} dans laquelle le télémètre 11 a mesuré le point réel.

En particulier, le périphérique d'interaction comporte un détecteur de localisation 110ₚ apte à fournir, au casque de réalité virtuelle, un signal *sm* comportant une position du périphérique d'interaction pos_{R}.

En particulier, le périphérique d'interaction comporte un détecteur de distance 110_{d} apte à fournir, au casque de réalité virtuelle, un signal *sm* comportant la mesure m_{PR} de position relative d'un point réel PR d'un espace réel ER, le point réel PR étant visé par le télémètre11. La mesure m_{PR} de position relative du point réel PR est notamment une distance entre le point réel PR et le télémètre 11.

En particulier, le signal de mesure *sm* comporte, outre la mesure m_{PR} de position relative d'un point réel PR, une ou plusieurs des données suivantes :
- une direction θ_{R} dans laquelle le télémètre 11 a mesuré le point réel,
- une position du périphérique d'interaction pos_{R}.

En particulier, le périphérique d'interaction 1 comporte un contrôleur 14 apte à être manipuler par un utilisateur UR portant le casque de réalité virtuelle 1. Le contrôleur 14 active *trg* le télémètre 11 sur commande *am* de l'utilisateur UR.

En particulier, le télémètre 1 comporte un détecteur de distance 110_{d} apte à fournir la mesure m_{PR} de position relative d'un point réel PR. Notamment, le détecteur de distance 110_{d} émet un signal *se* vers le point réel PR visé et reçoit un signal *sr* correspondant à une réflexion d'au moins une partie du signal émis *se* par le point réel PR. Ainsi, en fonction de l'instant d'émission *te* du signal émis *se* et de l'instant de réception *tr* de du signal réfléchi *sr,* le détecteur de distance 110_{d} est apte à déterminer une distance entre le télémètre 11 et le point réel PR. La détermination de distance est effectuée, par exemple, par un calculateur (non illustré) du détecteur de distance 110_{d}.

Eventuellement, le détecteur de distance 110_{d} comporte un générateur d'un signal d'émission (non illustré) apte à être au moins partiellement réfléchi par un point réel PR. En particulier, le générateur de signal d'émission génère un signal permettant de réduire le délai entre l'instant d'émission *te* et l'instant de réception *tr* afin de réduire le délai de fourniture du signal de mesure *sm* au casque de réalité virtuel 2.

Soit le détecteur de distance 110_{d} utilise un émetteur du périphérique d'interaction pour émettre vers le point réel le signal d'émission *se,* soit le détecteur de distance 110_{d} comporte un émetteur du signal d'émission *se.* En outre, soit le détecteur de distance 110_{d} utilise un récepteur du périphérique d'interaction pour recevoir du point réel le signal réfléchi *sr,* soit le détecteur de distance 110_{d} comporte un récepteur du signal réfléchi *sr.*

En particulier, le télémètre 11 comporte un viseur 111 permettant de viser, c'est-à-dire de pointer, le télémètre vers le point réel PR dont une mesure m_{PR} de la position relative doit être effectuée par le télémètre 11.

Le viseur 111 est notamment une lunette de visée implémentée dans le télémètre de tel sorte que le télémètre 11 effectue la mesure m_{PR} de la position relative du point réel PR visé par l'utilisateur UR au travers la lunette de visée 111. Ainsi, la lunette de visée permet à l'utilisateur de viser le point réel PR, c'est-à-dire de voir le point réel PR au travers la lunette de visée 111.

De manière alternative, le viseur 111 est notamment un laser de visée ou laser de pointage. Le viseur 111 comporte au moins un générateur d'un signal laser (non illustré) et un émetteur (non illustré) du signal laser généré, aussi appelé signal de visée *sv.* Ainsi, l'utilisateur UR déplace le télémètre 111, voir le périphérique d'interaction 11 comportant le télémètre 111, de tel sorte que le signal de visée *sv* pointe le point réel PR.

Dans un mode de réalisation particulier, le viseur 111 est implémenté dans le détecteur de distance 110_{d}. Eventuellement, le signal de visée *sv* et le signal émis se apte à être réfléchi au moins partiellement par le point réel PR sont un seul et même signal.

En particulier, le périphérique d'interaction 1 comporte un dispositif de virtualisation de données réelles 13 apte à transformer le signal de mesure *sm* relatif au point réel PR en un signal de mesure *sm*' relatif à un point virtuel PV fonction du point réel mesuré PR.

En particulier, le périphérique d'interaction 1 comporte un émetteur 12 apte à transmettre au casque de réalité virtuel 2 un signal de mesure : soit le signal de mesure *sm* relatif au point réel PR, soit le signal de mesure *sm*' relatif au point virtuel PV. Ainsi le casque de réalité virtuel 2 et le périphérique d'interaction 1 communique via un réseau de communication sans fil 9 (Bluetooth^{™}, WiFi^{™}, 4G, 5G, etc.).

De manière alternative, la connexion entre le casque de réalité virtuel 2 et le périphérique d'interaction 1 est filaire. Le périphérique d'interaction comporte alors un connecteur 12 permettant de connecter un fil 9 pour une connexion avec le casque de réalité virtuel 2. Le connecteur 12 est soit un connecteur USB, un connecteur micro-USB, un connecteur fibre, un connecteur Ethernet^{™}, etc.

La figure 1b illustre un schéma tridimensionnel simplifié d'un périphérique d'interaction selon l'invention.

En particulier, le périphérique d'interaction 1 est un périphérique portable. La figure 1b montre un exemple de périphérique d'interaction 1 portable et manipulable.

L'utilisateur UR tient le périphérique d'interaction 1 dans sa main et pointe le télémètre du périphérique d'interaction 1 vers un point réel PR. Le télémètre 11 fournit alors un signal de mesure comportant une mesure m_{PR} de position relative du point réel PR d'un espace réel ER visé.

En particulier, le télémètre 11 envoie un signal émis se dans la direction du point réel PR à mesurer et reçoit un signal réfléchi *sr* correspondant à une réflexion d'au moins une partie du signal émis se par le point réel PR. La réception du signal réfléchi *sr* permet au télémètre de déterminer la mesure m_{PR} de position relative du point réel PR d'un espace réel ER visé.

En particulier, le périphérique d'interaction 1 comporte un contrôleur 14. Le contrôleur 14 est une interface homme-machine permettant de recevoir une commande *am* de l'utilisateur UR. Le contrôleur 14 est, notamment, une interface de saisie, tel qu'un bouton (voir illustration de la figure 1b), un clavier, un écran tactile... ; une interface de capture (microphone pour commande vocale, gestuelle...) Une action as de l'utilisateur UR par rapport à ce contrôleur 14 (appui sur le bouton, sur une touche du clavier, un tap sur une partie prédéfinie de l'écran tactile, capture d'une commande vocale de mesure, geste préfini - par exemple, avant-arrière rapide - sans modification de visée ) déclenche *trg* une activation du télémètre, notamment commande une mesure par le télémètre 11 (par exemple, déclenche l'envoi du signal d'émission *se*).

Dans l'exemple de la figure 1b, le périphérique d'interaction 1 comporte un émetteur 12 envoyant le signal de mesure *sm* au casque de réalité virtuel 2 porté par l'utilisateur UR.

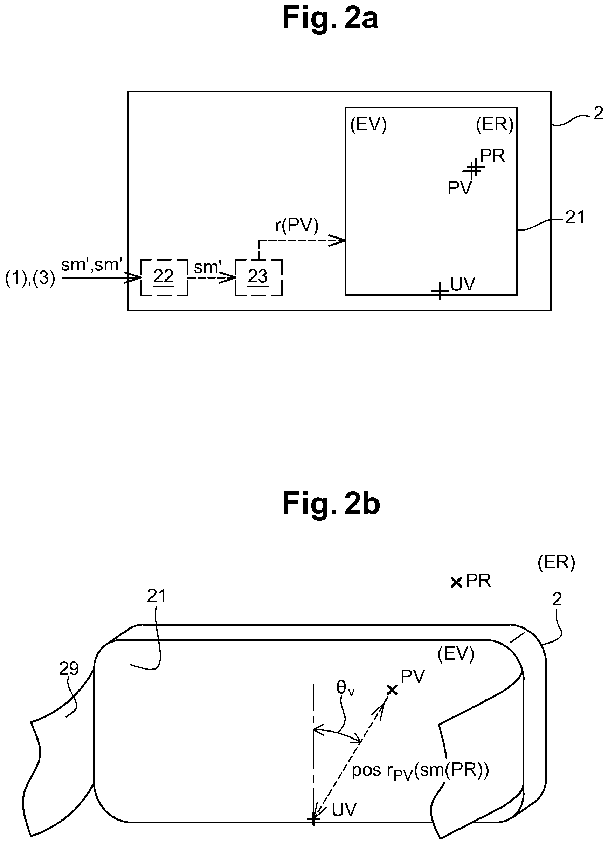

La figure 2a illustre un schéma-bloc simplifié d'un casque de réalité virtuel selon l'invention.

Le casque de réalité virtuelle 2 est apte à être connecté à un périphérique d'interaction 1. Le casque de réalité virtuelle 2 comporte un afficheur 21 apte à reproduire un point virtuel PV dans un espace virtuel EV. Le point virtuel PV est défini par une position relative du point virtuel posr_{PV} dans l'espace virtuel EV en fonction d'un signal de mesure *sm* d'un point réel PR visé par le périphérique d'interaction 1 dans l'espace réel ER.

En particulier, l'afficheur 21 est apte à permettre la visibilité de l'espace réel ER par l'utilisateur UR porteur du casque de réalité virtuelle 2 lors d'un relevé d'un espace réel ER au moyen du périphérique d'interaction 1. Ainsi, le casque de réalité virtuel 2 est un casque de réalité augmenté permettant d'afficher le point virtuel PV en surimposition sur le point réel PR de l'espace réel ER visible par l'utilisateur UR au travers de l'afficheur 21 du casque de réalité virtuel 2.

En particulier, le casque de réalité virtuel 2 comporte un récepteur 22 de signal de mesure *sm, sm'* provenant du périphérique d'interaction 1. Le signal de mesure reçu est soit un signal de mesure *sm* relatif au point réel PR, soit un signal de mesure *sm'* relatif à un point virtuel PV fonction du point réel mesuré PR.

Eventuellement, le casque de réalité virtuel 2 comporte un dispositif de virtualisation de données réelles 23 apte à transformer le signal de mesure *sm* relatif au point réel PR en un signal de mesure *sm*' relatif à un point virtuel PV fonction du point réel mesuré PR, voire en un signal d'affichage d'un point virtuel r(PV). Le signal d'affichage d'un point virtuel r(PV) commande l'affichage sur l'afficheur 21 du point virtuel PV.

De manière alternative, le casque de réalité virtuel 2 reçoit un signal de mesure *sm*' relatif à un point virtuel PV fonction du point réel mesuré PR soit directement du périphérique d'interaction 2, soit d'un dispositif de virtualisation 3.

Le point UV représente une représentation virtuelle de la situation dans l'espace virtuel EV de l'utilisateur réel UR.

La figure 2b illustre un schéma tridimensionnel simplifié d'un casque de réalité virtuel selon l'invention.

Le casque de réalité virtuel 2 est notamment un masque avec un afficheur 21 apte à être placé devant les yeux de l'utilisateur UR lorsque celui-ci porte le casque de réalité virtuel 2. Le masque est doté d'un bandeau 29 permettant de maintenir le casque de réalité virtuel 2 sur la tête de l'utilisateur avec le masque 21 placé devant les yeux de l'utilisateur réel UR.

La figure 2b montre que le point virtuel PV représentant le point réel PR dans l'espace virtuel EV affiché par l'afficheur 21 est positionné relativement à l'utilisateur virtuel UV correspondant à l'utilisateur réel UR en fonction du signal de mesure comportant la position relative du point réel PR : posr_{PV}(sm(PR)). Eventuellement, le point virtuel PV affiché par l'afficheur est positionné dans une direction virtuel θ_{V} fonction d'une direction θ_{R} de la mesure du point réel PR.

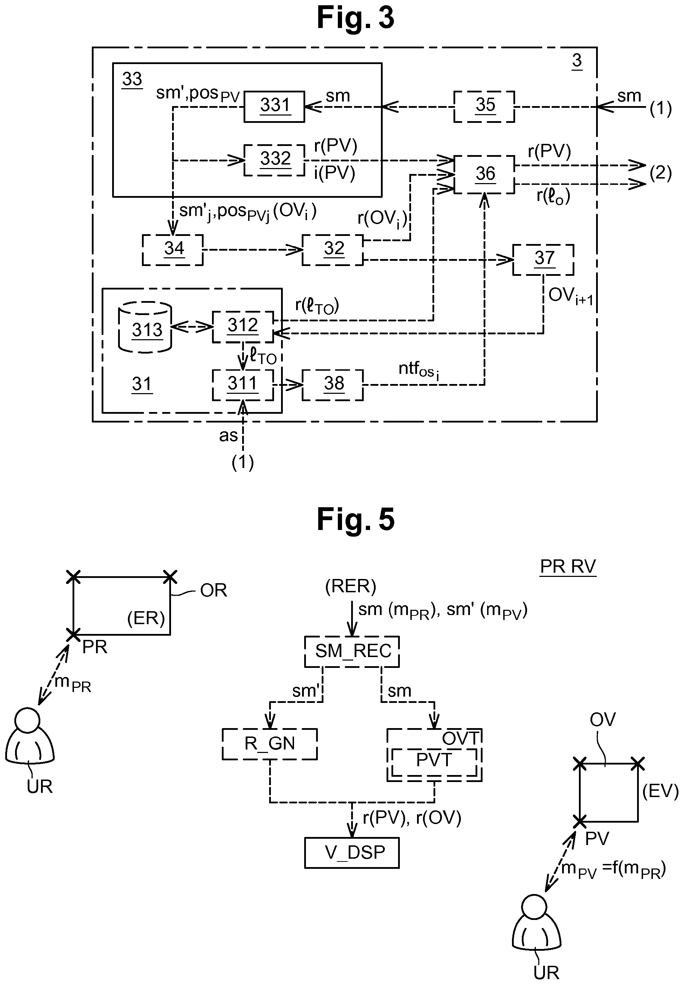

La figure 3 illustre un schéma-bloc simplifié d'un dispositif de virtualisation d'un espace réel selon l'invention.

Le dispositif de virtualisation 33 d'un point réel PR dans un espace virtuel EV rendu par un casque de réalité virtuelle 2 apte à être connecté à un périphérique d'interaction 1. Le dispositif de virtualisation 33 comporte un calculateur 331 d'une position relative d'un point virtuel pos_{PV} dans l'espace virtuel EV en fonction d'un signal de mesure *sm* du point réel PR visé par le périphérique d'interaction 1 dans un espace réel ER. Le calculateur 331 reçoit le signal de mesure *sm* du périphérique d'interaction 1 et commande l'affichage du point virtuel PV dans l'espace virtuel EV en fournissant la position relative du point virtuel pos_{PV} au casque de réalité virtuelle 2 rendant l'espace virtuel EV.

Notamment, le calculateur 331 fournit un signal de mesure du point virtuel *sm*' comportant la position relative du point virtuel pos_{PV}, et éventuellement, une direction virtuelle θ_{V} fonction d'une direction réel de visée θ_{R} du point réel PR et/ou la localisation virtuelle UV de l'utilisateur virtuelle ou du télémètre virtuel fonction d'une localisation réelle de l'utilisateur réel UR ou du télémètre réel.

En particulier, le dispositif de virtualisation d'un point réel 33 comporte un reproducteur d'images apte à transformer le signal de mesure *sm*' relatif au point virtuel PV fonction du point réel mesuré PR en un signal d'affichage du point virtuel r(PV).

L'invention propose éventuellement un dispositif de virtualisation 3 d'une zone réelle d'un espace réel ER dans un espace virtuel EV rendu par un casque de réalité virtuelle 2 apte à être connecté à un périphérique d'interaction 1. La zone réelle est composé d'au moins un objet réel OR. Le dispositif de virtualisation d'une zone réelle 3 comporte :
- un dispositif de virtualisation de point réel 33, et
- un générateur d'objet virtuel 34 en fonction des positions relatives de plusieurs points virtuels pos_{PVj}(OVi) fournies par le dispositif de virtualisation de point réel 33.

Le générateur d'objet virtuel 34 déclenche l'affichage de l'objet virtuel OVi dans l'espace virtuel EV en fournissant au moins une dimension de l'objet virtuel dim(OVᵢ₎ et une position relative de l'objet virtuel posr_{OVi} au casque de réalité virtuel 2 rendant l'espace virtuel EV.

En particulier, le dispositif de virtualisation d'une zone réelle 3 comporte un sélecteur de type d'objet 31 parmi une liste de type d'objets à virtualiser ITO. Le sélecteur de type d'objet 31 reçoit du périphérique d'interaction 1 une commande de sélection as permettant de sélectionner un type d'objet OTS dans la liste de type d'objets à virtualiser I_{TO} en fonction d'un objet réel OR de la zone réelle.

En particulier, le sélecteur de type d'objet 31 comporte une base de type d'objets 313 dans laquelle est enregistrée la liste de type d'objets I_{TO}. A un objet enregistré dans la base de type d'objets 313 est associé une ou plusieurs dimensions, et/ou un ou plusieurs points permettant de déterminer l'objet. A un type d'objet correspond au moins un paramètre descriptif permettant en prenant des valeurs distinctes de décrire plusieurs objets distincts d'un même type. Par type d'objet est notamment entendu forme d'objets (cube, parallélépipède, cylindre, sphère, etc.), catégorie d'objets (mur, porte, fenêtre, prise, etc. et/ou table rectangulaire, table ronde, chaise, caisson, etc.)...

Eventuellement, de tels types d'objets peuvent aussi être définis par au moins un point et une ou plusieurs dimensions constituant des paramètres descriptifs. Par exemple, la porte et/ou la fenêtre seront définies par deux dimensions telles qu'une hauteur et une largeur, et un point de référence prédéfini (par exemple, le coin en bas à gauche).

En particulier, le dispositif de virtualisation d'une zone réelle 3 comporte un assistant de relevé 38 apte à générer en fonction d'un objet réel OR à virtualiser au moins une notification ntf_{OSi} de relevé d'un point réel de l'objet réel destiné à être afficher par le casque de réalité virtuelle 2. Notamment, l'objet réel OR à virtualiser est défini par un type d'objet sélectionné OTSi fournit par le sélecteur de type d'objet 31. Dans ce cas, le générateur 34 d'objet virtuel génère un objet virtuel OVi en fonction des positions relatives des points virtuels fournies par le dispositif de virtualisation de point réel 33 selon les notifications de relevé générées par l'assistant 38 en fonction du type d'objet sélectionné correspondant à l'objet réel à virtualiser.

En particulier, le dispositif de virtualisation 3 comporte un récepteur 35 de signal de mesure *sm.* Le signal de mesure *sm* fournit par le périphérique d'interaction 1 comporte au moins une position relative du point réel PR visé par le périphérique d'interaction 1.

Soit le dispositif de virtualisation 3 propose une simple virtualisation du point réel PR. Alors le dispositif de virtualisation 3 comporte un calculateur 331 transformant le signal de mesure *sm* relatif au point réel PR en signal de mesure *sm'* relatif à un point virtuel PV et/ou la mesure m_{PR} de la position relative du point réel posr_{PR} en position relative d'un point virtuel posr_{PV}.

Notamment, le calculateur 331 transforme une direction θ_{R} de visée lors de la mesure du point réel PR en une direction virtuel θ_{V}. La direction virtuelle θ_{V} est intégrée au signal de mesure *sm*' du point virtuel PV.

Notamment, le calculateur 331 transforme la localisation du point de visée ou point de mesure pos_{R} (c'est-à-dire la localisation du télémètre) en une localisation virtuelle du point de mesure posv. La localisation virtuelle du point de mesure posv est intégrée au signal de mesure *sm*' du point virtuel PV.

Eventuellement, le dispositif de virtualisation 3 comporte un générateur d'images 332 générant une image du point virtuel PV ainsi calculé. Le générateur d'image 332 fournit soit un signal d'image du point virtuel i(PV), soit directement un signal de reproduction r(PV) du point virtuel PV à afficher.

En particulier, le dispositif de virtualisation 3 comporte un émetteur 36 du signal d'image du point virtuel i(PV) ou du signal de reproduction du point virtuel r(PV) à destination du casque de réalité virtuel 2.

Soit le dispositif de virtualisation 3 propose une virtualisation d'un objet réel OR. Alors le dispositif de virtualisation 3 comporte un calculateur 331 transformant le signal de mesure *sm* relatif à un point réel PR en signal de mesure *sm'* relatif à un point virtuel PV et/ou la mesure m_{PR} de la position relative du point réel posr_{PR} en position relative d'un point virtuel posr_{PV}.

Notamment, le calculateur 331 transforme la localisation du point de visée ou point de mesure pos_{R} (c'est-à-dire la localisation du télémètre) en une localisation virtuelle du point de mesure posv. La localisation virtuelle du point de mesure posv est intégrée au signal de mesure *sm*' du point virtuel PV.

Eventuellement, le dispositif de virtualisation 3 comporte un générateur d'objets 34 générant un objet virtuel PV à partir de plusieurs points virtuels PV_{j, j=1...J} déterminées au moyen du calculateur 331 en fonction plusieurs points réels PR_{j, j=1...J} visés successivement par le périphérique d'interaction 1. Par exemple, le calculateur 331 fournit plusieurs position relatives de point virtuels pos_{PVj}(OVi),_{j=1...J} et/ou plusieurs signaux de mesures sm'_{j,j=1...J} pour former un objet virtuel OVi. Le générateur d'objet OVi fournit un signal de mesure de l'objet virtuel sm'_{OVi}. soit un signal de positions virtuelles relatives définissant l'objet virtuel OVi.

Eventuellement, le dispositif de virtualisation 3 comporte un générateur d'images d'objets 32 générant une image d'un objet virtuel OVi ainsi généré. Le générateur d'image 32 fournit soit un signal d'image de l'objet virtuel i(OVi), soit directement un signal de reproduction r(OVi) de l'objet virtuel OVi à afficher.

En particulier, le dispositif de virtualisation 3 comporte un émetteur 36 du signal d'image de l'objet virtuel i(OVi) ou du signal de reproduction de l'objet virtuel r(OVi) à destination du casque de réalité virtuel 2.

En particulier, le dispositif de virtualisation 3 comporte un sélecteur de type d'objet 31 permettant d'indiquer préalablement aux mesures de points réel à quel type d'objets ces mesures correspondent.

Par exemple, le sélecteur de type d'objet 31 fournit une liste de type d'objets I_{TO} au casque de réalité virtuelle 2. Notamment la liste de type d'objets est lue par le sélecteur de type d'objet 31 dans une base de type d'objets 313. En particulier, le sélecteur de type d'objet 31 comporte la base de type d'objets 313. Eventuellement, le sélecteur de type d'objet 31 comporte en outre une interface de sélection 312 fournissant soit une image de la liste de types d'objets i(I_{To}), soit un signal de reproduction de la liste de types d'objets r(I_{To}) au casque de réalité virtuelle 2, notamment via l'émetteur 36.

Par exemple, le sélecteur de type d'objets 31 reçoit une indication relative à l'objet réel mesuré du périphérique d'interaction 1. Notamment, une action de sélection *as* de l'utilisateur UR est transmise par le périphérique d'interaction 1 au dispositif de virtualisation 3 et en particulier au sélecteur 31. Notamment, le sélecteur 31 comporte une interface d'entrée de sélection 311 apte à recevoir l'action de sélection *as* et à déterminer le type d'objet de la liste I_{To} auquel l'action de sélection as correspond, c'est-à-dire le type d'objet sélectionné OTS.

En particulier, le type d'objet sélectionné OTSi est utilisé par le dispositif de virtualisation 3 pour générer l'objet virtuel OVi.

En particulier, le dispositif de virtualisation 3 comporte un assistant de relevé 38 apte à guider les relevés d'un objet réel OR par un utilisateur UR au moyen d'un périphérique d'interaction 1. Notamment, l'assistant de relevé 38 a connaissance du type d'objet réel OR pour lequel l'utilisateur UR fait un relevé au moyen du sélecteur de type d'objets 31. L'assistant de relevé 38 guide notamment les relevés en notifiant ntf_{OSi} l'utilisateur UR des opérations à effectuer au moyen du périphérique d'interaction 1 pour effectuer les relevés nécessaires à la génération de l'objet virtuel correspondant à l'objet réel à virtualiser, éventuellement en fonction d'un type d'objet sélectionné OTS fournit par le sélecteur 31 définissant le type de l'objet réel OR.

En particulier, la notification de guidage de relevé ntf_{OSi} est transmise par le dispositif de virtualisation 3 au moyen d'in émetteur 36 à destination du casque de réalité virtuel 2 pour être afficher et lue par l'utilisateur UR.

En particulier, le dispositif de virtualisation 3 comporte générateur 37 d'une zone virtuelle composée de plusieurs objets virtuels virtualisant une zone réelle composée de plusieurs objets réels. Notamment, le générateur de zone virtuelle 37 déclenche la virtualisation d'un objet supplémentaire tant que l'ensemble des objets composant la zone réelle n'a pas été virtualiser. Par exemple, le générateur de zone virtuelle 37 déclenche le sélecteur 31 pour un nouvel objet OVᵢ₊₁.

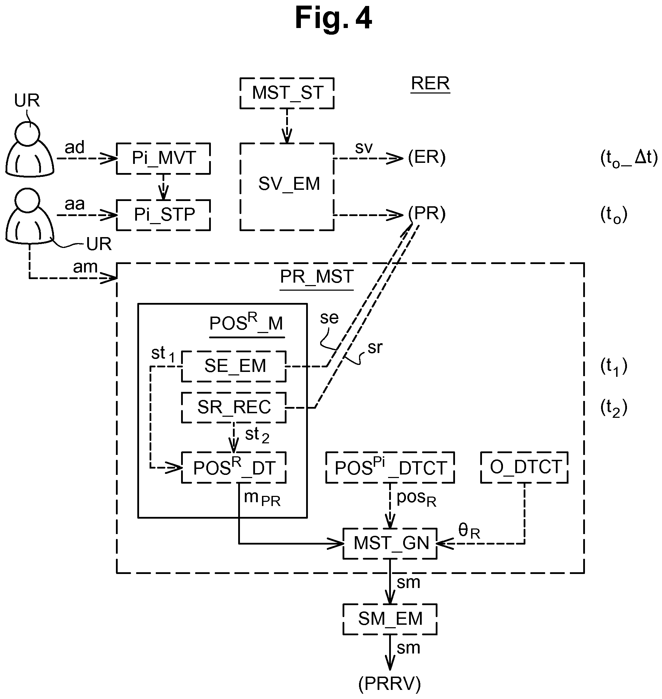

La figure 4 illustre un schéma-bloc simplifié d'un procédé de relevé d'un point réel selon l'invention.

Le procédé de relevé RER d'un espace réel ER destiné à être intégré dans un espace virtuel EV est mis en œuvre par un périphérique d'interaction 1. Le procédé de relevé RER comporte :
- un pointage d'un point réel PR de l'espace réel ER par le périphérique d'interaction 1,
- une mesure POS^{R}_M de la position relative d'un point réel PR visé par le périphérique d'interaction 1 lors du pointage, La mesure POS^{R}_M de position relative fournit un signal de mesure *sm* apte à permettre à reproduire le point réel PR visé dans un espace virtuel EV rendu par le casque de réalité virtuelle 2.

En particulier, le signal de mesure *sm* fournit par la mesure POS^{R}_M de la position relative du point réel PR comporte une position relative mesurée m_{PR} du point réel PR.

En particulier, le procédé de relevé RER comporte un lancement MST_ST du procédé de relevé déclenchant notamment le démarrage d'un télémètre du périphérique d'interaction 1. Eventuellement, le lancement du procédé de relevé MST_ST déclenche ou commande le démarrage d'un viseur 111.

En particulier, le lancement du procédé de relevé MST_ST déclenche ou commande une émission SV_EM d'un signal de visée sv dans l'espace réel ER par le périphérique d'interaction 1.

En particulier, un utilisateur UR manipule le périphérique d'interaction 1 émettant le signal de visée *sv.* L'utilisateur UR commande *ad* notamment un déplacement PI_MVT du périphérique d'interaction déplaçant ainsi le signal de visée vers un point réel PR à relever, par exemple à partir d'un instant t₀-Δt.

En particulier, lorsque le signal de visée *sv* pointe le point réel PR à relever, l'utilisateur UR commande aa un arrêt PI_STP du mouvement du périphérique d'interaction, par exemple à un instant t₀.

Notamment, le pointage comporte l'émission du signal de visée SV_EM lorsque ce signal point le point réel PR à relever.

En particulier, lorsque le périphérique d'interaction 1, notamment le télémètre 11 du périphérique d'interaction, vise le point réel PR, l'utilisateur déclenche la mesure POS^{R}_M de la position relative d'un point réel PR visé par le périphérique d'interaction 1. Par exemple, lorsque le périphérique d'interaction 1 vise le point réel PR, l'utilisateur déclenche une mesure PR_MST du point réel PR à relever visé par le périphérique d'interaction 1, la mesure PR_MST du point réel PR comportant notamment la mesure POS^{R}_M de la position relative d'un point réel PR visé par le périphérique d'interaction 1.

En particulier, la mesure POS^{R}_M de la position relative d'un point réel PR visé par le périphérique d'interaction 1 comporte une émission SE_EM d'un signal d'émission *se* vers le point réel PR. Le signal d'émission *se* est, par exemple, un signal apte à être réfléchi au moins partiellement par un point réel PR. L'émission SE_EM est notamment effectuée à un instant t₁ postérieur ou égale à l'instant t₀ d'arrêt du déplacement du périphérique d'interaction PI_STP.

En particulier, la mesure POS^{R}_M de la position relative d'un point réel PR visé par le périphérique d'interaction 1 comporte une réception SR_REC d'un signal *sr* provenant du point réel PR. Notamment, suite à l'émission SE_EM du signal d'émission *se* vers le point réel PR, le signal reçu *sr* correspondant à une partie du signal d'émission *se* réfléchie par le point réel PR. La réception du signal SR_REC est notamment effectuée à un instant t₂ postérieur ou égale à l'instant t₀ d'arrêt du déplacement du périphérique d'interaction PI_STP, voire postérieur ou égale à l'instant t₁ d'émission du signal SE_EM d'émission vers le point réel PR.

En particulier, la mesure POS^{R}_M de la position relative d'un point réel PR visé par le périphérique d'interaction 1 comporte une détermination POS^{R}_DT de la position relative du point réel PR fournissant le signal de mesure *sm,* notamment la position relative mesurée du point réel m_{PR}. Notamment, la détermination POS^{R}_DT de la position relative du point réel PR effectue un calcul en fonction de l'émission SE_EM du signal d'émission *se* vers le point réel PR et/ou la réception SR_REC d'un signal *sr* provenant du point réel PR. Par exemple, la détermination POS^{R}_DT de la position relative du point réel PR est fonction d'une donnée d'instant d'émission st₁ et d'une donnée d'instant de réception st₂.

En particulier, la mesure PR_MST du point réel PR à relever comporte en outre une détection de direction θ_DTCT fournissant une direction du point réel à relever θ_{R}.

En particulier, la mesure PR_MST du point réel PR à relever comporte en outre une détection de localisation POS^{PI}_DTCT fournissant une localisation pos_{R} du périphérique d'interaction, voire du télémètre du périphérique d'interaction, lors du relevé du point réel PR.

En particulier, la mesure PR_MST du point réel PR à relever comporte en outre un générateur de signal de mesure MST_GN intégrant dans un signal de mesure *sm* une ou plusieurs données de mesure, telles que la position relative mesurée du point réel m_{PR} et/ou la direction du point réel à relever θ_{R} et/ou la localisation pos_{PI} du périphérique d'interaction lors du relevé du point réel PR.

En particulier, le procédé de relevé RER comporte une émission du signal de mesure SM_EM à destination du casque de réalité virtuelle. Notamment, l'émission du signal de mesure SM_EM transmet le signal de mesure *sm* à un procédé de reproduction PRRV du point réel PR relevé dans un espace virtuel.

Un mode de réalisation particulier du procédé de relevé RER est un programme comprenant des instructions de code de programme pour l'exécution des étapes du procédé de relevé d'un espace réel lorsque ledit programme est exécuté par un processeur.

La figure 5 illustre un schéma-bloc simplifié d'un procédé de reproduction virtuel d'un point réel dans un espace virtuel selon l'invention.

Le procédé de reproduction PRRV d'un point réel PR dans un espace virtuel EV rendu par un casque de réalité virtuelle 2 apte à être connecté à un périphérique d'interaction 1 comporte un affichage V_DSP d'un point virtuel PV dans un espace virtuel EV. Le point virtuel PV est défini par une position relative m_{PV} du point virtuel PV dans l'espace virtuel EV fonction d'un signal de mesure *sm* d'un point réel PR visé par le périphérique d'interaction 1 dans l'espace réel ER.

En particulier, le procédé de reproduction PRRV comporte une réception SM_REC d'un signal de mesure *sm* provenant d'un relevé de point réel RER. Soit le signal de mesure reçu *sm* par la réception SM_REC est un signal de mesure *sm* du point réel PR, soit un signal de mesure sm' relatif à un point virtuel PV correspondant à une virtualisation du point réel PR relevé. Le signal de mesure *sm* du point réel PR comporte, par exemple, une position relative m_{PR} du point réel PR dans l'espace réel ER. Le signal de mesure *sm*' du point virtuel PV comporte, par exemple, une position relative m_{PV} du point virtuel PV dans l'espace virtuel EV.

En particulier, le procédé de reproduction PRRV comporte une génération d'image R_GN générant un signal de reproduction r(PV) du point virtuel en fonction du signal de mesure reçu *sm*' relatif au point virtuel PV.

En particulier, le procédé de reproduction PRRV comporte une virtualisation PVT du point réel relevé PR en fonction du signal de mesure reçu *sm.* Notamment, la virtualisation PVT du point réel relevé PR comporte une génération d'image R_GN générant un signal de reproduction r(PV) du point virtuel en fonction du signal de mesure *sm*' relatif au point virtuel PV et fournit par la virtualisation PVT.

En particulier, le procédé de reproduction PRRV comporte une virtualisation OVT d'un objet réel OR relevé en fonction de signaux de mesure reçu *sm* fournissant au moins des mesures de positions relatives m_{PR} des points réels relevés. L'objet réel relevé OR comporte au moins le point réel relevé PR. Notamment, la virtualisation OVT de l'objet réel relevé OR comporte une génération d'image R_GN générant un signal de reproduction r(OV) de l'objet virtuel en fonction de signaux de mesure sm'relatif aux points virtuels PV et fournit par la virtualisation d'objet OVT.

En particulier, la virtualisation OVT d'un objet réel OR relevé comporte au moins une virtualisation PVT de point réel pour les points réels relevés PR composant l'objet réel OR.

Un mode de réalisation particulier du procédé de reproduction PRRV est un programme comprenant des instructions de code de programme pour l'exécution des étapes du procédé de reproduction lorsque ledit programme est exécuté par un processeur.

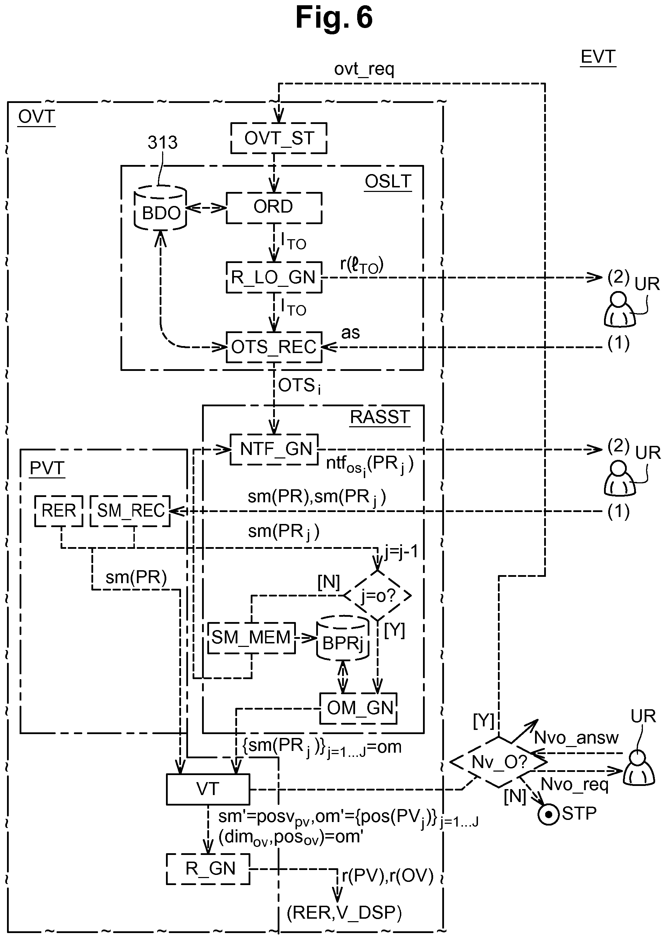

La figure 6 illustre un schéma-bloc simplifié d'un procédé de virtualisation d'au moins un élément, un point réel et/ou un ou plusieurs objets réels, d'un espace réel selon l'invention.

Le procédé de virtualisation PVT d'un point réel dans un espace virtuel rendu par un casque de réalité virtuelle 2 apte à être connecté à un périphérique d'interaction 1 comporte un calcul VT d'une position relative pos_{PV} d'un point virtuel PV dans l'espace virtuel EV en fonction d'un signal de mesure sm(PR) du point réel visé par le périphérique d'interaction 1 dans un espace réel ER. Le calcul VT déclenche l'affichage V_DSP du point virtuel PV dans l'espace virtuel EV en fournissant la position relative pos_{PV} du point virtuel au casque de réalité virtuelle 2 rendant l'espace virtuel.

En particulier, le calcul VT déclenche la reproduction PRRV du point virtuel PV dans l'espace virtuel EV en fournissant la position relative pos_{PV} du point virtuel au casque de réalité virtuelle 2 rendant l'espace virtuel. Notamment, la position relative pos_{PV}, aussi référencé m_{PV} sur la figure 5, du point virtuel est fourni par le procédé de virtualisation de point réel PVT à la reproduction de point virtuel PRRV dans un signal de mesure *sm*' relatif au point virtuel.

En particulier, le procédé de virtualisation PVT d'un point réel comporte une réception SM_REC d'un signal de mesure relatif au point réel relevé *sm(PR).*

En particulier, le procédé de virtualisation PVT d'un point réel est mis en œuvre par le périphérique d'interaction 1. Alors, le procédé de virtualisation PVT comporte notamment le procédé de relevé RER fournissant le signal de mesure *sm*(PR) relatif au point réel. Un exemple de procédé de relevé RER mis en œuvre par le procédé de virtualisation PVT est illustré par la figure 4.

En particulier, le procédé de virtualisation PVT d'un point réel comporte une génération d'image R_GN générant un signal de reproduction r(PV) du point virtuel en fonction du signal de mesure calculé *sm*' relatif au point virtuel PV.

Le procédé de virtualisation d'une zone réelle EVT d'un espace réel dans un espace virtuel rendu par un casque de réalité virtuelle 2 apte à être connecté à un périphérique d'interaction 1 peut être mis en œuvre soit par un dispositif de virtualisation 3 distinct du périphérique d'interaction 1 et du casque de réalité virtuelle 2, soit par le périphérique d'interaction 1, soit par le casque de réalité virtuelle. La zone réelle est composée d'au moins un objet réel défini par plusieurs points réels PR.

Le procédé de virtualisation d'une zone réelle EVT comporte :
- un procédé de virtualisation de point réel PVT, et
- une génération d'objet virtuel VT en fonction des positions relatives de plusieurs points virtuels fournies par le procédé de virtualisation de point réel PVT.

La génération d'objet virtuel VT déclenche l'affichage de l'objet virtuel V_DSP dans l'espace virtuel EV en fournissant au moins une dimension de l'objet virtuel dim_{OV} et une position relative de l'objet virtuel posov au casque de réalité virtuel 2 rendant l'espace virtuel.

En particulier, le procédé de virtualisation d'une zone réelle EVT comporte une virtualisation d'objet réel OVT répétée autant de fois que la zone réel comporte d'objets réels ORi à relever.

En particulier, la virtualisation d'objet réel comporte un démarrage d'une virtualisation d'un objet réel OVT_ST. Le démarrage de la virtualisation d'objet est notamment déclenché (non illustré) par le démarrage MST_ST du procédé de relevé RER.

Par dimension de l'objet virtuel OV est notamment entendu soit une distance dans une direction donnée (telle que largeur, longueur, hauteur, profondeur) à partir de la position relative de l'objet virtuel constituant un point de référence de l'objet virtuel OV (point en bas à gauche devant, en haut à droite derrière, etc.), soit les positions relatives de points virtuels d'un ensemble de deux points virtuels {pos(PV1), , pos(PV2)}, etc.

En particulier, le procédé de virtualisation d'une zone réelle EVT comporte, pour chaque point réel PRj de l'objet réel ORi, une réception SM_REC d'un signal de mesure relatif au point réel relevé *sm(PRj).*

En particulier, le procédé de virtualisation d'une zone réelle EVT est mis en œuvre par le périphérique d'interaction 1. Alors, le procédé de virtualisation d'une zone réelle EVT comporte notamment le procédé de relevé RER fournissant le signal de mesure *sm*(PRj) relatif au point réel PRj. Un exemple de procédé de relevé RER mis en œuvre par procédé de virtualisation d'une zone réelle EVT est illustré par la figure 4.

Cette étape de relevé RER ou de réception de signal de mesure SM_REC est répétée pour différents points réels PRj, j=1...J de l'objet réel OR à relever. Par exemple, la génération d'objet virtuel OVT comporte une vérification de l'itération j=0 ? sur les points réels PRj à relever. Dans notre exemple, la génération d'objet virtuel OVT récupère d'abord le signal de mesure du point réel PRj=J, puis PRj=J-1... en décrémentant l'indice j=j-1 jusqu'au dernier point réel à relever PR1 de l'objet ORi.

Tant que le dernier point réel PR1 n'a pas été relevé [N], le procédé de virtualisation d'une zone réelle EVT comporte, éventuellement, une mémorisation du signal de mesure SM_MEM relatif au dernier point réel relevé sm(PRj) et réitère, respectivement le relevé RER ou la réception de signal de mesure pour un autre point réel PRⱼ₋₁ de l'objet réel OR.

Lorsque le dernier point réel PR1 a pas été relevé [Y], le procédé de virtualisation d'une zone réelle EVT comporte notamment une génération OM_GN d'un signal de mesure relatif à l'objet réel relever om, constitué par exemple par l'ensemble {sm(PRj)}_{j=1...J} des signaux de mesure relatifs au points réels PRj relevés constituant l'objet réel ORi.

En particulier, le procédé de virtualisation d'une zone réelle EVT comporte un calcul VT de mesure de l'objet virtuel OV dans l'espace virtuel EV en fonction du signal de mesure de l'objet réel relevé om de l'espace réel ER. Le calcul de mesure VT fournit alors une mesure om' de l'objet virtuel composé notamment d'un ensemble de mesures de points virtuels {sm'(PRj)}_{j=1...J} déterminées en fonction des mesures des points réels {sm(PRj)}_{j=1...J} définissant l'objet réel ORi relevé. En particulier, la mesure om' comporte une dimension dim_{OV} de l'objet virtuel OVi et une position relative de l'objet virtuel posov.

En particulier, le procédé de virtualisation d'une zone réelle EVT comporte une génération d'image R_GN générant un signal de reproduction r(PV) de l'objet virtuel en fonction du signal de mesure calculé *om*' relatif à l'objet virtuel OV.

En particulier, le procédé de virtualisation d'une zone réelle EVT comporte une sélection de type d'objet OSLT parmi une liste de type d'objets à virtualiser ITO. La sélection de type d'objet OSLT recevant du périphérique d'interaction 1 une commande de sélection *as* permettant de sélectionner un objet OTSi dans la liste de type d'objets ITO à virtualiser en fonction d'un objet réel OR de la zone réelle.

Par exemple, la sélection de type d'objet OSLT fournit une liste de type d'objets Iₒ à un générateur d'image de liste d'objet. Notamment la liste de type d'objets est lue par le sélecteur de type d'objet 31 dans une base de type d'objets 313. En particulier, le sélecteur de type d'objet 31 comporte la base de type d'objets 313. Eventuellement, le sélecteur de type d'objet 31 comporte en outre une interface de sélection 312 fournissant soit une image de la liste de types d'objets i(Iₒ), soit un signal de reproduction de la liste de types d'objets r(Iₒ) au casque de réalité virtuelle 2, notamment via l'émetteur 36.

Par exemple, le sélecteur de type d'objets 31 reçoit une indication relative à l'objet réel mesuré du périphérique d'interaction 1. Notamment, une action de sélection *as* de l'utilisateur UR est transmise par le périphérique d'interaction 1 au dispositif de virtualisation 3 et en particulier au sélecteur 31. Notamment, le sélecteur 31 comporte une interface d'entrée de sélection 311 apte à recevoir l'action de sélection as et à déterminer l'objet de la liste Iₒ auquel l'action de sélection as correspond, c'est-à-dire le type d'objet sélectionné OTS.

En particulier, le type d'objet sélectionné OTS est utilisé par le procédé de virtualisation d'une zone réelle EVT pour générer l'objet virtuel OVi.

En particulier, la sélection de type d'objet OSLT comporte une lecture ORD d'une liste de type d'objets I_{TO}, par exemple dans une base de type d'objets BDO, 313.

En particulier, la sélection de type d'objet OSLT comporte une génération R_LO_GN d'un signal de reproduction de la liste de types d'objets lue r(I_{TO}). Le signal de reproduction de la liste de types d'objets lue r(I_{TO}) est fourni par la génération de signal de reproduction de listes d'objet R_LO-GN au casque de réalité virtuel 2, notamment à une étape d'affichage mise en œuvre par le casque de réalité virtuel 2. Eventuellement, le signal de reproduction de la liste de types d'objets lue r(I_{TO}) est un signal interactif, c'est-à-dire un signal permettant une interaction avec un élément affiché de la liste de types d'objets I_{TO} affichée par le casque de réalité virtuel 2.

L'utilisateur UR porteur du casque de réalité virtuel 2 utilise le périphérique d'interaction 1 pour commander as une sélection d'un objet de la liste de types d'objets I_{TO}. Par exemple, le périphérique d'interaction 1 permet d'interagir directement avec un objet Oi de la liste de types d'objets affichée ITO par le casque de réalité virtuel 2.

En particulier, la sélection de type d'objet OSLT comporte une réception d'une sélection de type d'objet OTS_REC du périphérique d'interaction 1, notamment sous forme d'une commande de sélection as permettant de sélectionner un type d'objet OTSi dans la liste de type d'objets I_{TO} à virtualiser en fonction d'un objet réel OR de la zone réelle.

En particulier, la réception de la sélection de type d'objet OTS_REC récupère des paramètres descriptifs d'objet en fonction de le type d'objet sélectionné OTSi. Les paramètres descriptifs du type d'objet sélectionné sont notamment récupérés dans une base de type d'objets BDO dans laquelle la liste de types d'objets est enregistrée. Les paramètres descriptifs de types d'objet sont, par exemple, une ou plusieurs dimensions, et/ou un ou plusieurs points permettant de déterminer l'objet.

En particulier, le procédé de virtualisation d'une zone réelle EVT comporte une assistance de relevé RASST apte à guider les relevés d'un objet réel OR par un utilisateur UR au moyen d'un périphérique d'interaction 1. Notamment, l'assistance de relevé RASST a connaissance du type d'objet réel OR pour lequel l'utilisateur UR fait un relevé par la sélection de type d'objet OTSLT. L'assistance de relevé RASST guide notamment les relevés en notifiant ntf_{OSi} l'utilisateur UR des opérations à effectuer au moyen du périphérique d'interaction 1 pour effectuer les relevés nécessaires à la génération de l'objet virtuel correspondant à l'objet réel à virtualiser, éventuellement en fonction d'un objet sélectionné OTS fournit par le sélecteur 31 définissant le type de l'objet réel OR.

En particulier, la notification de guidage de relevé ntf_{OSi} est générée NFT_GN puis transmise par le procédé de virtualisation d'une zone réelle EVT à destination du casque de réalité virtuel 2 pour être afficher et lue par l'utilisateur UR.

En particulier, l'assistance de relevé RASST comporte la génération NTF_GN de notification de guidage de relevé. Dans le cas où un type d'objet OTSi a été préalablement sélectionné dans une liste d'objet, la notification générée ntf_{OSi} est éventuellement fonction de paramètres descriptifs du type d'objet sélectionné OTSi.

L'assistance RASST fournit ainsi la notification générée ntf_{OSi} au casque de réalité virtuelle 2 pour être affichée à destination de l'utilisateur UR. En fonction de la notification affichée ntf_{OSi} par le casque de réalité virtuelle 2, l'utilisateur UR déclenche un relevé RER d'un premier point réel OR1 d'un objet réel du premier type d'objet sélectionné OTS1. Notamment, le périphérique d'interaction 1 fournit alors un signal de mesure relatif au premier point réel sm(PRj)j=1 au procédé de virtualisation de point réel PVT.

En particulier, l'assistance RASST reçoit le signal de mesure relatif au premier point réel sm(PRj)j=1, notamment soit directement du procédé de relévé RER, soit d'une réception de signal de mesure SM_REC.

En particulier, l'assistance RASST comporte une vérification j=0 ? permettant de vérifier si toutes les mesures *sm* relatives à l'objet réel ORi ont été fournies, c'est-à-dire si les mesures sm de tous les points réels PRj de l'objet réel ORi ont été fournies conformément aux paramètres descriptifs du type d'objet sélectionné OTSi. Dans notre exemple, le signal de mesure du point réel PRJ est d'abord relever, puis PRJ-1... , l'assistance RASST décrémentant l'indice j=j-1 jusqu'au dernier point réel à relever PR1 de l'objet ORi.

En particulier, l'assistance RASST déclenche la répétition du relevé pour les autres points réels PRj, j=1...J de l'objet réel ORi à relever. Notamment, l'assistance RASST modifie la notification de guidage de relevé ntfOSi en fonction des points réels restants à relever (Par exemple, lorsque les points permettant le relevé de la largeur d'un porte ont déjà été relevé, la notification sera modifié pour déclencher le relever du point de hauteur de porte).

En particulier, tant que le dernier point réel PR1 n'a pas été relevé [N], l'assistance RASST comporte, éventuellement, une mémorisation du signal de mesure SM_MEM relatif au dernier point réel relevé sm(PRj) et réitère, respectivement le relevé RER ou la réception de signal de mesure pour un autre point réel PRⱼ₋₁ de l'objet réel OR.

Lorsque le dernier point réel PR1 a pas été relevé [Y], le procédé de virtualisation d'une zone réelle EVT comporte notamment une génération OM_GN d'un signal de mesure relatif à l'objet réel relever om, constitué par exemple par l'ensemble {sm(PRj)}_{j=1...J} des signaux de mesure relatifs au points réels PRj relevés constituant l'objet réel ORi.

En particulier, le procédé de virtualisation d'objet OVT comporte une répétition de l'étape de virtualisation de point réel PVT pour l'ensemble des points réels de l'objet réel OR à virtualiser.

En particulier, le procédé de virtualisation de zones réelles EVT comporte une répétition de l'étape de virtualisation d'objet réel OVT pour l'ensemble des objets réels de la zone réel à virtualiser dans l'espace réel. Notamment, si la zone réelle à virtualiser est une pièce d'un appartement, d'une maison, d'un immeuble, une zone d'un espace ouvert (ou open space en anglais) d'un immeuble de bureaux, etc., les objets réels à virtualiser sont des éléments délimitant la zone, tel que des murs, portes, fenêtres, cloisons, plafond, sol, etc.

Par exemple, lorsque le procédé de virtualisation de zone réelle EVT a fourni un signal de mesure om' d'un objet virtuel OVi correspondant à un objet réel ORi de l'espace réel ER, le procédé de virtualisation de zone réelle EVT comporte une vérification Nv_O ? permettant de déterminer si un nouvel objet réel de l'espace réel doit être virtualiser. Notamment, cette vérification Nv_O ? est déclenché par le calcul VT de mesure de l'objet virtuel OV.

Si un aucun nouvel objet doit être virtualisé [N], le procédé de virtualisation de zone réelle EVT comporte notamment un arrêt STP du procédé de virtualisation de zone réelle. Sinon, si un nouvel objet doit être virtualisé [Y], le procédé de virtualisation de zone réelle EVT comporte une répétition d'un ou plusieurs des étapes du procédé de virtualisation de zone réelle EVT dont le procédé de virtualisation des points réels {PRj} du nouvel objet Oᵢ₊₁ et le calcul VT de mesure de l'objet virtuel OV en fonction des signaux de mesure des points réels {PRj} du nouvel objet Oᵢ₊₁ relevé. En particulier, si un nouvel objet doit être virtualisé [Y], la vérification Nv_O ? déclenche *ovt_req* le démarrage d'une virtualisation d'un objet réel OVT_ST pour un nouvel objet réel ORi.

Eventuellement, les objets réels sont des objets mobiles tels que fenêtres, portes, chaises, etc. virtualisés sous la forme d'objets virtuels mobiles interactifs définit par plusieurs positions de l'objet virtuel permettant ainsi à l'utilisateur UR de déplacer l'objet virtuel mobile par interaction avec l'objet virtuel mobile au moyen du périphérique d'interaction. Ainsi, la zone réel est virtualisé non plus en trois dimensions mais en 4 dimensions permettant à l'utilisateur réel UR de déplacer les objets mobiles de la zone réel : par exemple, d'ouvrir et/ou fermer les fenêtres virtuelles, les portes virtuelles, de bouger la chaise virtuelle pour s'assoir virtuellement à la table virtuelle, etc.

Un mode de réalisation particulier du procédé de virtualisation PCT, OVT, EVT est un programme comprenant des instructions de code de programme pour l'exécution des étapes du procédé de virtualisation d'un espace réel lorsque ledit programme est exécuté par un processeur.

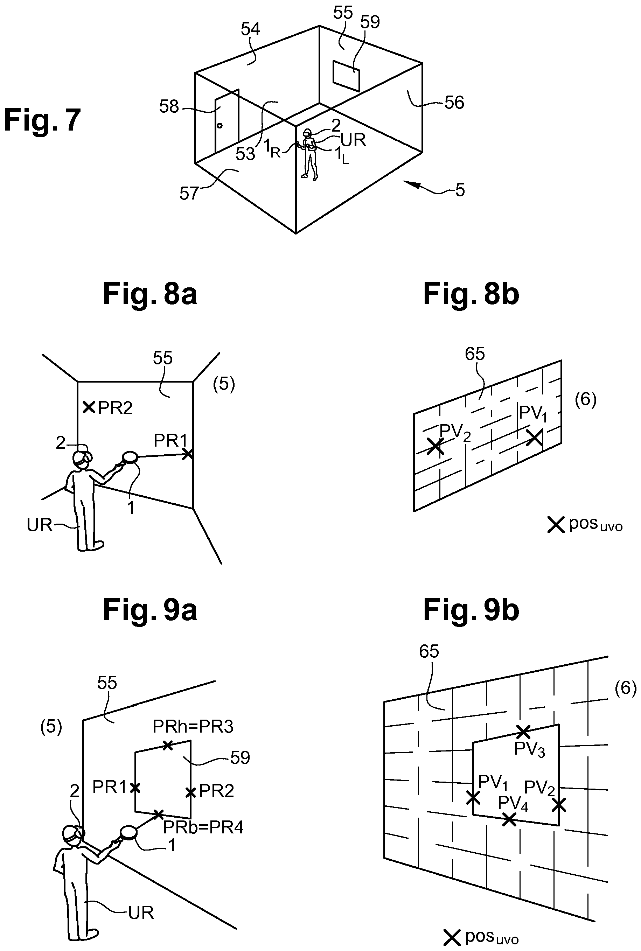

La figure 7 illustre un schéma simplifié d'une pièce réelle à virtualiser selon l'invention.

La figure 7 représente un environnement réel 5, ici une pièce, à modéliser. L'environnement réel est ici simplifié et comprend par exemple une pièce comprenant 4 murs 54, 55, 56, 57 et une porte 58. Un utilisateur UR est placé dans la pièce et muni d'un casque 2 de réalité virtuelle. Un exemple de casque de réalité virtuelle est un casque de réalité mixte ou réalité augmenté. Il s'agit par exemple d'un casque Oculus Quest. Le casque de réalité virtuelle 2 est associé à au moins un périphérique d'interaction 1_{L}, 1_{R} (deux sur la figure 7), aussi appelés contrôleurs, destinés à être pris en main par l'utilisateur UR du casque 2 et qui permettent à l'utilisateur UR d'interagir dans l'environnement virtuel EV projeté par le casque 2.

Un tel casque de réalité virtuelle est notamment un casque autonome en ce sens qu'il ne nécessite pas de terminal supplémentaire pour son fonctionnement. Dans ce cas, le casque de réalité virtuel implémente le dispositif de virtualisation de la figure 3. Un tel casque 2 est équipé de capteurs, par exemple de caméra, pour détecter en permanence les mouvements du ou des périphériques d'interaction qui lui sont associés.

La figure 8a illustre un schéma simplifié d'un relevé d'un mur réel à virtualiser selon l'invention.

L'utilisateur UR se positionne dans la pièce de l'environnement réel 5, par exemple approximativement au centre de la pièce. Pour virtualiser le mur 55 lui faisant face, il oriente un périphérique d'interaction 1 vers un premier point PR1 du mur 55 qu'il visualise au moyen notamment d'un signal de visée, par exemple de type laser. L'utilisateur UR déclenche alors la mesure du premier point réel PR1 du mur 55 à virtualiser. Puis, l'utilisateur UR déplace le périphérique d'interaction 1 vers un deuxième point PR2 du mur 55 et déclenche à nouveau une mesure cette fois du deuxième point réel PR2 du mur 55 à virtualiser.

Soit, préalablement aux mesures, l'utilisateur UR a sélectionné dans une liste de type d'objets le type d"objet à virtualiser : notamment un mur. Et, les paramètres descriptifs d'un mur prévoient la prise de mesure de deux points du mur permettant de générer un plan passant par ces deux points. Dans ce cas, au moins une notification demandant la mesure de deux points distincts du mur ou une première notification demandant la mesure d'un premier point du mur puis une deuxième notification demandant la mesure d'un deuxième point du mur sont affichée(s) par le casque pour l'utilisateur UR. La deuxième notification est notamment déclenchée par la mesure du premier point PR1.

La figure 8b illustre un schéma simplifié d'une reproduction d'un mur virtuel généré à partir des relevés du mur réel de la figure 8a selon l'invention.

Soit, préalablement aux mesures, l'utilisateur UR a sélectionné dans une liste de type d'objets le type d"objet à virtualiser : notamment un mur. Et, les paramètres descriptifs d'un mur prévoient la prise de mesure de deux points du mur permettant de générer un plan passant par ces deux points.

Soit, postérieurement aux mesures des premier PR1 et deuxième points PR2 d'un mur 55 à virtualiser, le type d"objet à virtualiser : notamment un mur, est sélectionné dans une liste de type d'objets soit automatiquement en fonction des points mesurés PR1, PR2 (nombre, type de mesure, etc.) soit par l'utilisateur UR dans une liste de type d'objets à virtualiser.

En particulier, les paramètres descriptifs d'un mur prévoient la prise de mesure de deux points du mur permettant de générer un plan passant par ces deux points. Dans ce cas, le dispositif de virtualisation de la figure 3 implémenté dans le casque 2 génère en fonction des mesures des deux points réels PR1 et PR2 fournit par le périphérique d'interaction 1, deux points virtuels PV1 et PV2 permettant de rendre dans l'espace virtuel 6 ces deux points réels, puis un plan 65 passant par ces deux points virtuels permettant de reproduire dans l'espace virtuel 6 le mur réel 55.

La figure 9a illustre un schéma simplifié d'un relevé d'une fenêtre réelle à virtualiser sur le mur de la figure 8a selon l'invention.

Pour continuer la virtualisation d'une pièce, l'utilisateur UR soit reste à la même position dans la pièce de l'environnement réel 5 que sur la figure 8a, soit se déplace. Pour virtualiser la fenêtre 59 sur le mur 55 lui faisant face, il oriente un périphérique d'interaction 1 vers un point PR4 de la fenêtre 59, par exemple un point en bas de la fenêtre PRb qu'il visualise au moyen notamment d'un signal de visée, par exemple de type laser. L'utilisateur UR déclenche alors la mesure de ce point réel PR4 de la fenêtre 59 à virtualiser. Puis, l'utilisateur UR déplace le périphérique d'interaction 1 successivement vers les trois autres points PR3 (point en haut de la fenêtre PRh), PR2 (point sur un coté de la fenêtre) et PR1 (point sur un autre côté de la fenêtre) de la fenêtre 59 du mur 55 et déclenche à nouveau une mesure cette fois, respectivement, des points réels PR3, PR2, PR1 de la fenêtre 59 à virtualiser.

Soit, préalablement aux mesures, l'utilisateur UR a sélectionné dans une liste de type d'objets le type d"objet à virtualiser : notamment un fenêtre. Et, les paramètres descriptifs d'une fenêtre prévoient la prise de mesure de quatre points de la fenêtre permettant de générer un parallélogramme passant par ces quatre points. Dans ce cas, au moins une notification demandant la mesure de quatre points distincts de la fenêtre ou une première notification demandant la mesure d'un premier point de la fenêtre puis, successivement, d'autres notifications demandant les mesures des points PR3, PR2, PR1 de la fenêtres sont affichée(s) par le casque pour l'utilisateur UR. Les notifications suivantes sont notamment déclenchées par la mesure du point précédent, respectivement PR4, PR3, PR2.

La figure 9b illustre un schéma simplifié d'une reproduction d'un mur virtuel généré à partir des relevés du mur réel de la figure 8a et d'une fenêtre virtuelle générée à partir des relevées de la fenêtre réel de la figure 9a sur le mur virtuel selon l'invention.

Soit, préalablement aux mesures, l'utilisateur UR a sélectionné dans une liste de type d'objets le type d"objet à virtualiser : notamment une fénêtre. Et, les paramètres descriptifs d'une fenêtre prévoient la prise de mesure de quatre points du périmètre de la fenêtre permettant de générer un parallélogramme passant par ces quatre points.

Soit, postérieurement aux mesures des quatre points PR1, PR2, PR3 et PR4 d'une fenêtre 59 à virtualiser, le type d"objet à virtualiser : notamment une fenêtre, est sélectionné dans une liste de type d'objets soit automatiquement en fonction des points mesurés PR1, PR2, PR3 et PR4 (nombre, type de mesure, etc.) soit par l'utilisateur UR dans une liste de type d'objets à virtualiser.

En particulier, les paramètres descriptifs d'une fenêtre prévoient la prise de mesure de quatre points de la fenêtre permettant de générer un parallélogramme passant par ces quatre points. Dans ce cas, le dispositif de virtualisation de la figure 3 implémenté dans le casque 2 génère en fonction des mesures des quatre points réels PR1, PR2, PR3 et PR4 fournit par le périphérique d'interaction 1, quatre points virtuels PV1, PV2 , PV¨3 et PV4 permettant de rendre dans l'espace virtuel 6 ces quatre points réels, puis un parallélogramme 69 passant par ces quatre points virtuels permettant de reproduire dans l'espace virtuel 6 la fenêtre réelle 59.

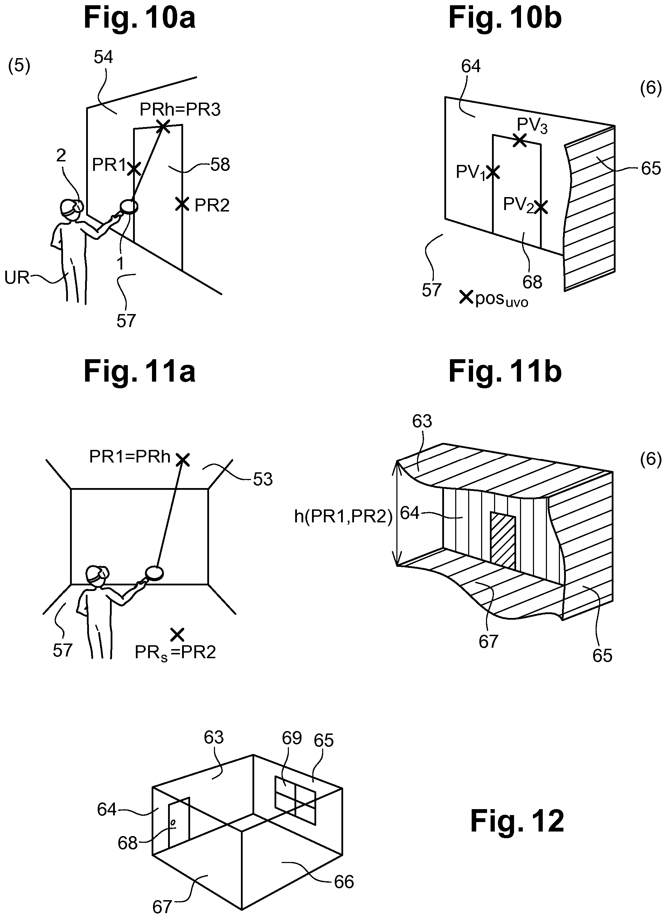

La figure 10a illustre un schéma simplifié d'un relevé d'une porte réelle à virtualiser sur un mur réel virtualisé selon l'invention.

Pour continuer la virtualisation de la pièce 5, l'utilisateur UR se déplace notamment pour faire face à un autre mur 54 de la pièce 5. La virtualisation du mur 54 se déroule notamment comme prévu par les figures 8a et 8b.

Pour virtualiser la porte 58 sur le mur 54 lui faisant face, l'utilisateur UR oriente le périphérique d'interaction 1 vers un point PR3 de la porte 58, par exemple un point en haut de la porte PRh qu'il visualise au moyen notamment d'un signal de visée, par exemple de type laser. L'utilisateur UR déclenche alors la mesure de ce point réel PR3 de la porte 58 à virtualiser. Puis, l'utilisateur UR déplace le périphérique d'interaction 1 successivement vers les deux autres points PR2 (point sur un coté de la porte) et PR1 (point sur un autre côté de la porte) de la porte 58 du mur 54 et déclenche à nouveau une mesure cette fois, respectivement, des points réels PR2, PR1 de la porte 58 à virtualiser.

Soit, préalablement aux mesures, l'utilisateur UR a sélectionné dans une liste de type d'objets le type d'objet à virtualiser : notamment une porte. Et, les paramètres descriptifs d'une porte prévoient la prise de mesure de trois points de la porte permettant de générer un parallélogramme passant par ces trois points et ayant le sol 57 pour côté inférieur. Dans ce cas, au moins une notification demandant la mesure de trois points distincts de la porte ou une première notification demandant la mesure d'un premier point de la porte puis, successivement, d'autres notifications demandant les mesures des points PR2, PR1 de la porte sont affichée(s) par le casque pour l'utilisateur UR. Les notifications suivantes sont notamment déclenchées par la mesure du point précédent, respectivement PR3, PR2.

La figure 10b illustre un schéma simplifié d'une reproduction d'un mur virtuel et d'une porte virtuelle générée à partir des relevées de la porte réel de la figure 10a sur le mur virtuel selon l'invention.

Soit, préalablement aux mesures, l'utilisateur UR a sélectionné dans une liste de type d'objets le type d"objet à virtualiser : notamment une porte. Et, les paramètres descriptifs d'une porte prévoient la prise de mesure de trois points du périmètre de la porte permettant de générer un parallélogramme passant par ces trois points et dont un coté est le sol 57.

Soit, postérieurement aux mesures des trois points PR1, PR2, et PR3 d'une porte 58 à virtualiser, le type d"objet à virtualiser : notamment une porte, est sélectionné dans une liste de type d'objets soit automatiquement en fonction des points mesurés PR1, PR2, et PR3 (nombre, type de mesure, etc.) soit par l'utilisateur UR dans une liste de type d'objets à virtualiser.

En particulier, les paramètres descriptifs d'une porte prévoient la prise de mesure de trois points de la porte permettant de générer un parallélogramme passant par ces trois points et ayant pour coté inférieur le sol 67. Dans ce cas, le dispositif de virtualisation de la figure 3 implémenté dans le casque 2 génère en fonction des mesures des trois points réels PR1, PR2, et PR3 fournit par le périphérique d'interaction 1, trois points virtuels PV1, PV2 , et PV3 permettant de rendre dans l'espace virtuel 6 ces trois points réels, puis un parallélogramme 68 passant par ces trois points virtuels et ayant pour coté inférieur le sol 67 permettant de reproduire dans l'espace virtuel 6 la porte réelle 58.

La figure 11a illustre un schéma simplifié d'un relevé d'un plafond à virtualiser selon l'invention.

Pour virtualiser le plafond 53, l'utilisateur UR oriente le périphérique d'interaction 1 vers un point PR1 du plafond 53 qu'il visualise au moyen notamment d'un signal de visée, par exemple de type laser.

L'utilisateur UR déclenche alors la mesure de ce point réel PR1 du plafond 53 à virtualiser. Puis, l'utilisateur UR déplace le périphérique d'interaction 1 vers un deuxième point PR2 sur le sol (pour déterminer la hauteur de plafond) et déclenche à nouveau une mesure du point réel PR2 du sol 57.

La figure 11b illustre un schéma simplifié d'une reproduction du plafond généré à partir des relevés du plafond réel de la figure 11a selon l'invention.

En particulier, les paramètres descriptifs d'un plafond prévoient la prise de mesure de deux points pour déterminer la hauteur de plafond (un au sol et un au plafond) permettant de générer un plan perpendiculaire au(x) mur(s) virtualisé(s) et passant pas un point distant du sol virtuel 67 d'une hauteur obtenue à partir de ces deux points PR1 et PR2. Dans ce cas, le dispositif de virtualisation de la figure 3 implémenté dans le casque 2 génère en fonction des mesures des deux points réels PR1, et PR2, fournit par le périphérique d'interaction 1, un plan parallèle au sol 67 et/ou perpendiculaire au murs(s) virtuel(s) 64, 65 à une hauteur h fonction des points réels mesurées PR1 et PR2 permettant de reproduire dans l'espace virtuel 6 le plafond 63.

La figure 12 illustre un schéma simplifié d'une reproduction d'une pièce virtuelle généré à partir des relevés de la pièce réelle de la figure 7 selon l'invention.

Ainsi, l'invention permet d'obtenir un plan 6 en n dimensions (3 dimensions dans l'exemple de la figure 12) d'une pièce vide ou meublée de manière simplifiée pour l'utilisateur UR puisque la réalisation du plan ne nécessite pas de connaissance technique ou d'utilisation d'outils complexes générant des risques d'erreurs de relevés quel que soit l'encombrement de la pièce puisque l'invention ne nécessite pas de contact de l'utilisateur UR ou d'un outil manipulé par l'utilisateur UR avec les éléments à mesurer.

L'utilisateur UR dispose donc au final d'un plan fidèle, rapide et simple à réaliser sans besoin de compétences particulières reproductible par un casque de réalité virtuel 2 permettant une interaction en réalité virtuelle avec des objets du plan : déplacement dans le plan, ouverture/fermeture de porte, fenêtre, etc. et/ou des objets dans le plan : déplacement de meuble, essai d'agencement, de décoration d'intérieure in situ virtuel, etc.

Un intérêt de l'invention est de permettre à un utilisateur de réaliser le relevé d'une pièce sans retirer les meubles (il point sur les murs uniquement) y compris dans des pièces très encombrés seul le télémètre doit accéder à distance au mur en au moins deux points représentatifs ou en intégrant les meubles au plan (le relevé des meubles est intégré à la prise de mesure).

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

## Revendications

1. Périphérique d'interaction apte à être connecté à un casque de réalité virtuelle, le casque de réalité virtuelle étant apte à fonctionner en mode réalité augmenté et en mode réalité virtuelle, le périphérique d'interaction comportant un télémètre apte à fournir, en réponse à une commande d'un utilisateur du casque de réalité virtuelle en mode réalité augmentée au moyen du périphérique d'interaction visant un point réel d'un espace réel, au casque de réalité virtuelle, un signal de mesure comportant une mesure de position relative du point réel de l'espace réel, le point réel étant visé par le télémètre lors d'un relevé de l'espace réel, le signal de mesure étant apte à permettre une reproduction du point réel mesuré dans un espace virtuel rendu par le casque de réalité virtuelle en mode réalité virtuelle lors d'une utilisation de l'espace virtuel.

2. Périphérique d'interaction selon la revendication précédente, dans lequel le périphérique d'interaction comporte un détecteur de direction apte à fournir, au casque de réalité virtuelle, un signal comportant une direction dans laquelle le télémètre a mesuré le point réel.

3. Périphérique d'interaction selon l'une quelconque des revendications précédentes, dans lequel le périphérique d'interaction comporte un détecteur de localisation apte à fournir, au casque de réalité virtuelle, un signal comportant une position du périphérique d'interaction.

4. Périphérique d'interaction selon l'une quelconque des revendications précédentes, dans lequel le périphérique d'interaction comporte un contrôleur apte à être manipuler par un utilisateur portant le casque de réalité virtuelle, le contrôleur activant le télémètre sur commande de l'utilisateur.

5. Périphérique d'interaction selon l'une quelconque des revendications précédentes, dans lequel le périphérique d'interaction est un périphérique portable.

6. Procédé de relevé d'un espace réel destiné à être intégré dans un espace virtuel, le procédé de relevé mis en œuvre par un périphérique d'interaction connecté à un casque de réalité virtuelle, le casque de réalité virtuelle étant apte à fonctionner en mode réalité augmenté et en mode réalité virtuelle, le procédé de relevé d'un espace réel comportant :
- un pointage d'un point réel de l'espace réel par le périphérique d'interaction,
- une mesure de la position relative du point réel visé par le périphérique d'interaction lors du pointage en réponse à une commande d'un utilisateur d'un casque de réalité virtuelle en mode réalité augmentée connecté au périphérique d'interaction, la mesure étant effectuée par un télémètre du périphérique d'interaction, la mesure de position relative fournissant un signal de mesure apte à permettre à reproduire le point réel visé dans un espace virtuel rendu par le casque de réalité virtuelle en mode réalité virtuelle lors d'une utilisation de l'espace virtuel.

7. Casque de réalité virtuelle apte à être connecté à un périphérique d'interaction, le casque de réalité virtuelle étant apte à fonctionner en mode réalité augmenté et en mode réalité virtuelle, le casque de réalité virtuelle comporte un afficheur apte à reproduire un point virtuel dans un espace virtuel en mode réalité virtuelle lors d'une utilisation de l'espace virtuel, le point virtuel étant défini par une position relative du point virtuel dans l'espace virtuel fonction d'un signal de mesure d'un point réel visé par le périphérique d'interaction dans l'espace réel en réponse à une commande d'un utilisateur du casque de réalité virtuelle en mode réalité augmentée au moyen du périphérique d'interaction visant le point réel de l'espace réel.

8. Casque de réalité virtuelle selon la revendication précédente, dans lequel l'afficheur est apte à permettre la visibilité de l'espace réel par l'utilisateur porteur du casque de réalité virtuelle lors d'un relevé d'un espace réel au moyen du périphérique d'interaction.

9. Procédé de reproduction d'un point réel dans un espace virtuel rendu par un casque de réalité virtuelle apte à être connecté à un périphérique d'interaction, le casque de réalité virtuelle étant apte à fonctionner en mode réalité augmenté et en mode réalité virtuelle, le procédé de reproduction comporte un affichage d'un point virtuel dans un espace virtuel en mode réalité virtuelle lors d'une utilisation de l'espace virtuel, le point virtuel étant défini par une position relative du point virtuel dans l'espace virtuel fonction d'un signal de mesure d'un point réel visé par le périphérique d'interaction dans l'espace réel en réponse à une commande d'un utilisateur du casque de réalité virtuelle en mode réalité augmentée au moyen du périphérique d'interaction visant le point réel de l'espace réel, et d'une position et d'une orientation du périphérique d'interaction lorsqu'il vise le point réel.

10. Dispositif de virtualisation d'un point réel dans un espace virtuel rendu par un casque de réalité virtuelle apte à être connecté à un périphérique d'interaction, le casque de réalité virtuelle étant apte à fonctionner en mode réalité augmenté et en mode réalité virtuelle, le dispositif de virtualisation comporte un calculateur d'une position relative d'un point virtuel dans l'espace virtuel en fonction d'un signal de mesure du point réel visé par le périphérique d'interaction dans un espace réel en réponse à une commande d'un utilisateur du casque de réalité virtuelle en mode réalité augmentée au moyen du périphérique d'interaction visant le point réel de l'espace réel, et d'une position et d'une orientation du périphérique d'interaction lorsqu'il vise le point réel, le calculateur recevant le signal de mesure du périphérique d'interaction et commande l'affichage du point virtuel dans l'espace virtuel en fournissant la position relative du point virtuel au casque de réalité virtuelle rendant l'espace virtuel.

11. Procédé de virtualisation d'un point réel dans un espace virtuel rendu par un casque de réalité virtuelle apte à être connecté à un périphérique d'interaction, le casque de réalité virtuelle étant apte à fonctionner en mode réalité augmenté et en mode réalité virtuelle, le procédé de virtualisation comporte un calcul d'une position relative d'un point virtuel dans l'espace virtuel en fonction d'un signal de mesure du point réel visé par le périphérique d'interaction dans un espace réel en réponse à une commande d'un utilisateur du casque de réalité virtuelle en mode réalité augmentée au moyen du périphérique d'interaction visant le point réel de l'espace réel, et d'une position et d'une orientation du périphérique d'interaction lorsqu'il vise le point réel, le calcul déclenche l'affichage du point virtuel dans l'espace virtuel en fournissant la position relative du point virtuel au casque de réalité virtuelle rendant l'espace virtuel.

12. Dispositif de virtualisation d'une zone réelle d'un espace réel dans un espace virtuel rendu par un casque de réalité virtuelle apte à être connecté à un périphérique d'interaction, la zone réelle étant composé d'au moins un objet réel, le dispositif de virtualisation d'une zone réelle comporte :
- un dispositif de virtualisation de point réel selon la revendication 10 effectuant une virtualisation des points réels définissant l'objet réel,
- un générateur d'objet virtuel en fonction des positions relatives de plusieurs points virtuels fournies par le dispositif de virtualisation de point réel, le générateur d'objet virtuel déclenche l'affichage de l'objet virtuel dans l'espace virtuel en fournissant au moins une dimension de l'objet virtuel et une position relative de l'objet virtuel au casque de réalité virtuel rendant l'espace virtuel.

13. Procédé de virtualisation d'une zone réelle d'un espace réel dans un espace virtuel rendu par un casque de réalité virtuelle apte à être connecté à un périphérique d'interaction, la zone réelle étant composé d'au moins un objet réel, le procédé de virtualisation d'une zone réelle comporte :
- un procédé de virtualisation de point réel selon la revendication 11, les points réels définissant l'objet réel,
- une génération d'objet virtuel en fonction des positions relatives de plusieurs points virtuels fournies par le procédé de virtualisation de point réel, la génération d'objet virtuel déclenche l'affichage de l'objet virtuel dans l'espace virtuel en fournissant au moins une dimension de l'objet virtuel et une position relative de l'objet virtuel au casque de réalité virtuel rendant l'espace virtuel.

14. Procédé de virtualisation d'une zone réelle selon la revendication précédente, dans lequel le procédé de virtualisation comporte une répétition des étapes de sélection, assistance, virtualisation de point réel, génération d'objet virtuel pour plusieurs objets de la zone réelle apte à permettre une génération d'un plan virtuel de la zone réelle, le plan virtuel étant composé par les objets virtuels générés.

15. Programme comprenant des instructions de code de programme pour l'exécution des étapes du procédé de relevé d'un espace réel selon la revendication 6 et/ou un procédé de reproduction selon la revendication 9 et/ou un procédé de virtualisation d'un point réel selon la revendication 11 ou d'une zone réelle selon l'une quelconque des revendications 13 ou 14 lorsque ledit programme est exécuté par un processeur.

## Patentansprüche

1. Interaktionsperipheriegerät, das geeignet ist, mit einer Virtual-Reality-Brille verbunden zu werden, wobei die Virtual-Reality-Brille geeignet ist, im Augmented-Reality-Modus und im Virtual-Reality-Modus zu funktionieren, wobei das Interaktionsperipheriegerät einen Entfernungsmesser umfasst, der geeignet ist, als Antwort auf einen Befehl eines Benutzers der Virtual-Reality-Brille im Augmented-Reality-Modus mittels des Interaktionsperipheriegeräts, das einen realen Punkt eines realen Raums anvisiert, an die Virtual-Reality-Brille ein Messsignal auszugeben, das eine relative Positionsmessung des realen Punkts des realen Raums umfasst, wobei der reale Punkt von dem Entfernungsmesser bei einer Erfassung des realen Raums anvisiert wird, wobei das Messsignal geeignet ist, eine Reproduktion des gemessenen realen Punkts in einem virtuellen Raum zu ermöglichen, der von der Virtual-Reality-Brille im Virtual-Reality-Modus bei einer Verwendung des virtuellen Raums wiedergegeben wird.

2. Interaktionsperipheriegerät nach dem vorhergehenden Anspruch, wobei das Interaktionsperipheriegerät einen Richtungsdetektor umfasst, der geeignet ist, an die Virtual-Reality-Brille ein Signal auszugeben, das eine Richtung umfasst, in welcher der Entfernungsmesser den realen Punkt gemessen hat.

3. Interaktionsperipheriegerät nach einem der vorhergehenden Ansprüche, wobei das Interaktionsperipheriegerät einen Ortungsdetektor umfasst, der geeignet ist, an die Virtual-Reality-Brille ein Signal auszugeben, das eine Position des Interaktionsperipheriegeräts umfasst.

4. Interaktionsperipheriegerät nach einem der vorhergehenden Ansprüche, wobei das Interaktionsperipheriegerät ein Bedienelement umfasst, das geeignet ist, von einem Benutzer betätigt zu werden, der die Virtual-Reality-Brille trägt, wobei das Bedienelement den Entfernungsmesser auf Befehl des Benutzers aktiviert.

5. Interaktionsperipheriegerät nach einem der vorhergehenden Ansprüche, wobei das Interaktionsperipheriegerät ein tragbares Peripheriegerät ist.

6. Verfahren zur Erfassung eines realen Raums, der dazu bestimmt ist, in einen virtuellen Raum integriert zu werden, wobei das Verfahren zur Erfassung von einem Interaktionsperipheriegerät ausgeführt wird, das mit einer Virtual-Reality-Brille verbunden ist, wobei die Virtual-Reality-Brille geeignet ist, im Augmented-Reality-Modus und im Virtual-Reality-Modus zu funktionieren, wobei das Verfahren zur Erfassung eines realen Raums umfasst:
- ein Zeigen auf einen realen Punkt des realen Raums durch das Interaktionsperipheriegerät,
- ein Messen der relativen Position des von dem Interaktionsperipheriegerät bei dem Zeigen anvisierten realen Punkts als Antwort auf einen Befehl eines Benutzers einer Virtual-Reality-Brille im Augmented-Reality-Modus, die mit dem Interaktionsperipheriegerät verbunden ist, wobei die Messung von einem Entfernungsmesser des Interaktionsperipheriegeräts durchgeführt wird, wobei die relative Positionsmessung ein Messsignal ausgibt, das geeignet ist, das Reproduzieren des anvisierten realen Punkts in einem virtuellen Raum zu ermöglichen, der von der Virtual-Reality-Brille im Virtual-Reality-Modus bei einer Verwendung des virtuellen Raums wiedergegeben wird.

7. Virtual-Reality-Brille, die geeignet ist, mit einem Interaktionsperipheriegerät verbunden zu werden, wobei die Virtual-Reality-Brille geeignet ist, im Augmented-Reality-Modus und im Virtual-Reality-Modus zu funktionieren, wobei die Virtual-Reality-Brille ein Display umfasst, das geeignet ist, einen virtuellen Punkt in einem virtuellen Raum im Virtual-Reality-Modus bei einer Verwendung des virtuellen Raums zu reproduzieren, wobei der virtuelle Punkt durch eine relative Position des virtuellen Punkts in dem virtuellen Raum definiert wird, die abhängig von einem Messsignal eines realen Punkts ist, der von dem Interaktionsperipheriegerät in dem realen Raum als Antwort auf einen Befehl eines Benutzers der Virtual-Reality-Brille im Augmented-Reality-Modus mittels des Interaktionsperipheriegeräts anvisiert wird, das den realen Punkt des realen Raums anvisiert.

8. Virtual-Reality-Brille nach dem vorhergehenden Anspruch, wobei das Display geeignet ist, die Sichtbarkeit des realen Raums für den Benutzer, der die Virtual-Reality-Brille trägt, bei einer Erfassung eines realen Raums mittels des Interaktionsperipheriegeräts zu ermöglichen.

9. Verfahren zum Reproduzieren eines realen Punkts in einem virtuellen Raum, der von einer Virtual-Reality-Brille wiedergegeben wird, die geeignet ist, mit einem Interaktionsperipheriegerät verbunden zu werden, wobei die Virtual-Reality-Brille geeignet ist, im Augmented-Reality-Modus und im Virtual-Reality-Modus zu funktionieren, wobei das Verfahren zum Reproduzieren ein Anzeigen eines virtuellen Punkts in einem virtuellen Raum im Virtual-Reality-Modus bei einer Verwendung des virtuellen Raums umfasst, wobei der virtuelle Punkt durch eine relative Position des virtuellen Punkts in dem virtuellen Raum definiert wird, die abhängig von einem Messsignal eines realen Punkts ist, der von dem Interaktionsperipheriegerät in dem realen Raum als Antwort auf einen Befehl eines Benutzers der Virtual-Reality-Brille im Augmented-Reality-Modus mittels des Interaktionsperipheriegeräts anvisiert wird, das den realen Punkt des realen Raums anvisiert, und von einer Position und von einer Ausrichtung des Interaktionsperipheriegeräts, wenn es den realen Punkt anvisiert.

10. Vorrichtung zur Virtualisierung eines realen Punkts in einem virtuellen Raum, der von einer Virtual-Reality-Brille wiedergegeben wird, die geeignet ist, mit einem Interaktionsperipheriegerät verbunden zu werden, wobei die Virtual-Reality-Brille geeignet ist, im Augmented-Reality-Modus und im Virtual-Reality-Modus zu funktionieren, wobei die Vorrichtung zur Virtualisierung einen Rechner für eine relative Position eines virtuellen Punkts in dem virtuellen Raum in Abhängigkeit von einem Messsignal des realen Punkts umfasst, der von dem Interaktionsperipheriegerät in einem realen Raum anvisiert wird als Antwort auf einen Befehl eines Benutzers der Virtual-Reality-Brille im Augmented-Reality-Modus mittels des Interaktionsperipheriegeräts, das den realen Punkt des realen Raums anvisiert, und von einer Position und von einer Ausrichtung des Interaktionsperipheriegeräts, wenn es den realen Punkt anvisiert, wobei der Rechner das Messsignal des Interaktionsperipheriegeräts empfängt und die Anzeige des virtuellen Punkts in dem virtuellen Raum steuert, wobei er die relative Position des virtuellen Punkts an die Virtual-Reality-Brille ausgibt, die den virtuellen Raum wiedergibt.

11. Verfahren zur Virtualisierung eines realen Punkts in einem virtuellen Raum, der von einer Virtual-Reality-Brille wiedergegeben wird, die geeignet ist, mit einem Interaktionsperipheriegerät verbunden zu werden, wobei die Virtual-Reality-Brille geeignet ist, im Augmented-Reality-Modus und im Virtual-Reality-Modus zu funktionieren, wobei das Verfahren zur Virtualisierung eine Berechnung einer relativen Position eines virtuellen Punkts in dem virtuellen Raum in Abhängigkeit von einem Messsignal des realen Punkts umfasst, der von dem Interaktionsperipheriegerät in einem realen Raum anvisiert wird als Antwort auf einen Befehl eines Benutzers der Virtual-Reality-Brille im Augmented-Reality-Modus mittels des Interaktionsperipheriegeräts, das den realen Punkt des realen Raums anvisiert, und von einer Position und von einer Ausrichtung des Interaktionsperipheriegeräts, wenn es den realen Punkt anvisiert, wobei die Berechnung die Anzeige des virtuellen Punkts in dem virtuellen Raum auslöst, indem sie die relative Position des virtuellen Punkts an die Virtual-Reality-Brille ausgibt, die den virtuellen Raum wiedergibt.

12. Vorrichtung zur Virtualisierung eines realen Bereichs eines realen Raums in einem virtuellen Raum, der von einer Virtual-Reality-Brille wiedergegeben wird, die geeignet ist, mit einem Interaktionsperipheriegerät verbunden zu werden, wobei der reale Bereich aus mindestens einem realen Objekt zusammengesetzt ist, wobei die Vorrichtung zur Virtualisierung eines realen Bereichs umfasst:
- eine Vorrichtung zur Virtualisierung eines realen Punkts nach Anspruch 10, die eine Virtualisierung der realen Punkte durchführt, die das reale Objekt definieren,
- einen Erzeuger eines virtuellen Objekts in Abhängigkeit von den relativen Positionen von mehreren virtuellen Punkten, die von der Vorrichtung zur Virtualisierung eines realen Punkts ausgegeben werden, wobei der Erzeuger eines virtuellen Objekts die Anzeige des virtuellen Objekts in dem virtuellen Raum auslöst, indem er mindestens eine Dimension des virtuellen Objekts und eine relative Position des virtuellen Objekts an die Virtual-Reality-Brille ausgibt, die den virtuellen Raum wiedergibt.

13. Verfahren zur Virtualisierung eines realen Bereichs eines realen Raums in einem virtuellen Raum, der von einer Virtual-Reality-Brille wiedergegeben wird, die geeignet ist, mit einem Interaktionsperipheriegerät verbunden zu werden, wobei der reale Bereich aus mindestens einem realen Objekt zusammengesetzt ist, wobei das Verfahren zur Virtualisierung eines realen Bereichs umfasst:
- ein Verfahren zur Virtualisierung eines realen Punkts nach Anspruch 11, wobei die realen Punkte das reale Objekt definieren,
- eine Erzeugung eines virtuellen Objekts in Abhängigkeit von den relativen Positionen von mehreren virtuellen Punkten, die von dem Verfahren zur Virtualisierung eines realen Punkts ausgegeben werden, wobei die Erzeugung eines virtuellen Objekts die Anzeige des virtuellen Objekts in dem virtuellen Raum auslöst, indem sie mindestens eine Dimension des virtuellen Objekts und eine relative Position des virtuellen Objekts an die Virtual-Reality-Brille ausgibt, die den virtuellen Raum wiedergibt.

14. Verfahren zur Virtualisierung eines realen Bereichs nach dem vorhergehenden Anspruch, wobei das Verfahren zur Virtualisierung eine Wiederholung der Schritte des Auswählens, Unterstützens, Virtualisierens eines realen Punkts, Erzeugens eines virtuellen Objekts für mehrere Objekte des realen Bereichs umfasst, die geeignet ist, eine Erzeugung eines virtuellen Plans des realen Bereichs zu ermöglichen, wobei der virtuelle Plan aus den erzeugten virtuellen Objekten zusammengesetzt ist.

15. Programm, das Programmcodeanweisungen umfasst, die bei der Ausführung des Programms durch einen Prozessor die Schritte des Verfahrens zur Erfassung eines realen Raums nach Anspruch 6 und/oder eines Verfahrens zum Reproduzieren nach Anspruch 9 und/oder eines Verfahrens zur Virtualisierung eines realen Punkts nach Anspruch 11 oder eines realen Bereichs nach einem der Ansprüche 13 bis 14 ausführen.

## Claims

1. Interaction peripheral able to be connected to a virtual reality headset, the virtual reality headset being able to operate in augmented reality mode and in virtual reality mode, the interaction peripheral comprising a rangefinder able, in response to a command from a user of the virtual reality headset in augmented reality mode by way of the interaction peripheral sighting a real point in a real space, to provide the virtual reality headset with a measurement signal comprising a measurement of the relative position of the real point in the real space, the real point being sighted by the rangefinder during a survey of the real space, the measurement signal being able to allow reproduction of the measured real point in a virtual space rendered by the virtual reality headset in virtual reality mode during use of the virtual space.

2. Interaction peripheral according to the preceding claim, wherein the interaction peripheral comprises a direction detector able to provide the virtual reality headset with a signal comprising a direction in which the rangefinder measured the real point.

3. Interaction peripheral according to either one of the preceding claims, wherein the interaction peripheral comprises a location detector able to provide the virtual reality headset with a signal comprising a position of the interaction peripheral.

4. Interaction peripheral according to any one of the preceding claims, wherein the interaction peripheral comprises a controller able to be manipulated by a user wearing the virtual reality headset, the controller activating the rangefinder upon the command of the user.

5. Interaction peripheral according to any one of the preceding claims, wherein the interaction peripheral is a portable peripheral.

6. Method for surveying a real space intended to be integrated into a virtual space, the surveying method being implemented by an interaction peripheral connected to a virtual reality headset, the virtual reality headset being able to operate in augmented reality mode and in virtual reality mode, the method for surveying a real space comprising:
- pointing at a real point in the real space by way of the interaction peripheral,
- measuring the relative position of the real point sighted by the interaction peripheral during the pointing in response to a command from a user of a virtual reality headset in augmented reality mode connected to the interaction peripheral, the measurement being carried out by a rangefinder of the interaction peripheral, the relative position measurement providing a measurement signal able to make it possible to reproduce the sighted real point in a virtual space rendered by the virtual reality headset in virtual reality mode during use of the virtual space.

7. Virtual reality headset able to be connected to an interaction peripheral, the virtual reality headset being able to operate in augmented reality mode and in virtual reality mode, the virtual reality headset comprising a display able to reproduce a virtual point in a virtual space in virtual reality mode during use of the virtual space, the virtual point being defined by a relative position of the virtual point in the virtual space depending on a measurement signal from a real point sighted by the interaction peripheral in the real space in response to a command from a user of the virtual reality headset in augmented reality mode by way of the interaction peripheral sighting the real point in the real space.

8. Virtual reality headset according to the preceding claim, wherein the display is able to allow the user wearing the virtual reality headset to see the real space during surveying of a real space by way of the interaction peripheral.

9. Method for reproducing a real point in a virtual space rendered by a virtual reality headset able to be connected to an interaction peripheral, the virtual reality headset being able to operate in augmented reality mode and in virtual reality mode, the reproduction method comprising displaying a virtual point in a virtual space in virtual reality mode during use of the virtual space, the virtual point being defined by a relative position of the virtual point in the virtual space depending on a measurement signal from a real point sighted by the interaction peripheral in the real space in response to a command from a user of the virtual reality headset in augmented reality mode by way of the interaction peripheral sighting the real point in the real space, and on a position and an orientation of the interaction peripheral when it sights the real point.

10. Device for virtualizing a real point in a virtual space rendered by a virtual reality headset able to be connected to an interaction peripheral, the virtual reality headset being able to operate in augmented reality mode and in virtual reality mode, the virtualization device comprising a computer for computing a relative position of a virtual point in the virtual space based on a measurement signal from the real point sighted by the interaction peripheral in a real space in response to a command from a user of the virtual reality headset in augmented reality mode by way of the interaction peripheral sighting the real point in the real space, and on a position and an orientation of the interaction peripheral when it sights the real point, the computer receiving the measurement signal from the interaction peripheral and commanding the display of the virtual point in the virtual space by providing the relative position of the virtual point to the virtual reality headset rendering the virtual space.

11. Method for virtualizing a real point in a virtual space rendered by a virtual reality headset able to be connected to an interaction peripheral, the virtual reality headset being able to operate in augmented reality mode and in virtual reality mode, the virtualization method comprising computing a relative position of a virtual point in the virtual space based on a measurement signal from the real point sighted by the interaction peripheral in a real space in response to a command from a user of the virtual reality headset in augmented reality mode by way of the interaction peripheral sighting the real point in the real space, and on a position and an orientation of the interaction peripheral when it sights the real point, the computing triggering the display of the virtual point in the virtual space by providing the relative position of the virtual point to the virtual reality headset rendering the virtual space.

12. Device for virtualizing a real area of a real space in a virtual space rendered by a virtual reality headset able to be connected to an interaction peripheral, the real area consisting of at least one real object, the device for virtualizing a real area comprising:
- a real-point virtualization device according to Claim 10 performing a virtualization of the real points defining the real object,
- a virtual object generator for generating virtual objects based on the relative positions of multiple virtual points as provided by the real-point virtualization device, the virtual object generator triggering the display of the virtual object in the virtual space by providing at least one dimension of the virtual object and a relative position of the virtual object to the virtual reality headset rendering the virtual space.

13. Method for virtualizing a real area of a real space in a virtual space rendered by a virtual reality headset able to be connected to an interaction peripheral, the real area consisting of at least one real object, the method for virtualizing a real area comprising:
- a real-point virtualization method according to Claim 11, the real points defining the real object,
- virtual object generation for generating virtual objects based on the relative positions of multiple virtual points as provided by the real-point virtualization method, the virtual object generation triggering the display of the virtual object in the virtual space by providing at least one dimension of the virtual object and a relative position of the virtual object to the virtual reality headset rendering the virtual space.

14. Method for virtualizing a real area according to the preceding claim, wherein the virtualization method comprises repeating the selection, assistance, real-point virtualization and virtual object generation steps for multiple objects in the real area, able to make it possible to generate a virtual plan of the real area, the virtual plan consisting of the generated virtual objects.

15. Program comprising program code instructions for executing the steps of the method for surveying a real space according to Claim 6 and/or a reproduction method according to Claim 9 and/or a method for virtualizing a real point according to Claim 11 or a real area according to either one of Claims 13 and 14 when said program is executed by a processor.
